# EUROPÄISCHE PATENTANMELDUNG

(11) **EP 1 093 860 A2**
(43) Veröffentlichungstag der Anmeldung: **25.04.2001**
(21) Anmeldenummer: 00119441.4
(22) Anmeldetag: 14.09.2000
(51) Int. Cl.: B05B 15/04

(54) **Abtropfstation und Verfahren zum Entfernen eines Nassmediums aus Fahrzeugkarosserien**

(30) Priorität: 19.10.1999 DE 19950201
(71) Anmelder: Dürr Systems GmbH, 70435 Stuttgart (DE)
(72) Erfinder: Besinger, Hartwig, 71729 Erdmannhausen (DE); Mogck, Gerhard, 74072 Heilbronn (DE)
(74) Vertreter: Hoeger, Stellrecht & Partner

(57) **Zusammenfassung**

Um eine Abtropfstation zum Entfernen eines Naßmediums aus Fahrzeugkarosserien (302), umfassend eine Drehvorrichtung (110), welche eine Aufnahme für eine Fahrzeugkarosserie (302) umfaßt und mittels welcher die Fahrzeugkarosserie (302) in mindestens eine Abtropfstellung drehbar ist, zu schaffen, welche es ermöglicht, Fahrzeugkarosserien (302) jeden Typs möglichst weitgehend zu entleeren, wird vorgeschlagen, daß die Drehvorrichtung (110) so ausgebildet ist, daß die in der Aufnahme aufgenommene Fahrzeugkarosserie (302) um eine Drehachse der Drehvorrichtung (110) frei drehbar und in beliebig vorgebbaren Abtropfstellungen anhaltbar ist.

## Beschreibung

Die vorliegende Erfindung betrifft eine Abtropfstation zum Entfernen eines Naßmediums aus Fahrzeugkarosserien, die eine Drehvorrichtung umfaßt, welche eine Aufnahme für eine Fahrzeugkarosserie umfaßt und mittels welcher die Fahrzeugkarosserie in mindestens eine Abtropfstellung drehbar ist.

Ferner betrifft die vorliegende Erfindung ein Verfahren zum Entfernen eines Naßmediums aus Fahrzeugkarosserien, bei dem eine Fahrzeugkarosserie mittels einer Drehvorrichtung in mindestens eine Abtropfstellung gedreht wird.

Abtropfstationen und Verfahren der eingangs genannten Art sind aus dem Stand der Technik bekannt.

Insbesondere sind Kippstationen zum Entleeren von aus einem Tauchlackierbad kommenden Fahrzeugkarosserien vor dem Eintritt der Fahrzeugkarosserien in einen Trockner bekannt, in denen die zu entleerende Fahrzeugkarosserie um einen Winkel von typischerweise 15 bis 20° gegen die Horizontale gekippt wird und in der gekippten Lage gehalten wird, um im Innenraum der Fahrzeugkarosserie angesammelten Lack aus der Karosserie nach außen ablaufen zu lassen.

Bei diesen bekannten Kippstationen ist der Winkel, um den die Fahrzeugkarosserie gekippt wird, durch die Konstruktion der Kippstation beschränkt. Außerdem ist der Kippwinkel, um den die Fahrzeugkarosserie gekippt wird, fest vorgegeben. Dies hat zur Folge, daß die Fahrzeugkarosserien häufig nicht in die günstigste Abtropfstellung zum Ablaufenlassen des darin angesammelten Naßmediums bewegt werden können. Dies gilt insbesondere dann, wenn die Kippstation zum Entleeren von Fahrzeugkarosserien unterschiedlichen Typs verwendet wird, da der zum Entleeren günstigste Kippwinkel von der Gestalt der zu entleerenden Fahrzeugkarosserie abhängt, bei den bekannten Kippstationen der Kippwinkel aber fest vorgegeben ist.

Der vorliegenden Erfindung liegt daher die Aufgabe zugrunde, eine Abtropfstation der eingangs genannten Art zu schaffen, welche es ermöglicht, Fahrzeugkarosserien jeden Typs möglichst weitgehend zu entleeren.

Diese Aufgabe wird bei einer Abtropfstation mit den Merkmalen des Oberbegriffs von Anspruch 1 erfindungsgemäß dadurch gelöst, daß die Drehvorrichtung so ausgebildet ist, daß die in der Aufnahme aufgenommene Fahrzeugkarosserie um eine Drehachse der Drehvorrichtung frei drehbar und in beliebig vorgebbaren Abtropfstellungen anhaltbar ist.

Mit der erfindungsgemäßen Abtropfstation kann die zu entleerende Fahrzeugkarosserie in eine oder mehrere Abtropfstellungen gebracht werden, in denen das in der Karosserie enthaltene Naßmedium besonders rasch und vollständig aus der Karosserie ablaufen kann. Da die Fahrzeugkarosserie um die Drehachse der Drehvorrichtung frei, das heißt um beliebige Drehwinkel, drehbar ist und die Abtropfstellungen, in denen die Fahrzeugkarosserie zum Abtropfen und Ablaufenlassen des Naßmediums gehalten wird, beliebig vorgebbar sind, ist es möglich, jede Fahrzeugkarosserie - in Abhängigkeit von der Gestalt des jeweiligen Fahrzeugkarosserietyps - eine oder mehrere optimale Abtropfstellungen einnehmen zu lassen.

Insbesondere ist es bei der erfindungsgemäßen Abtropfstation möglich, die Abtropfstellung, insbesondere den zum Erreichen der Abtropfstellung erforderlichen Drehwinkel, in Abhängigkeit vom Typ der zu entleerenden Fahrzeugkarosserie vorzugeben, so daß jede Fahrzeugkarosserie, die in der Abtropfstation entleert wird, in die für sie jeweils optimalen Abtropfstellungen gebracht wird, auch wenn Fahrzeugkarosserien unterschiedlichen Typs dieselbe Abtropfstation durchlaufen.

Da sich das zu entfernende Naßmedium in der zu entleerenden Fahrzeugkarosserie an unterschiedlichen Stellen, beispielsweise in der Bodenwanne oder im Bereich des Dachs, ansammeln kann und das Naßmedium aus diesen verschiedenen Sammelstellen in einer vorgegebenen Abtropfstellung unterschiedlich gut abläuft, ist es günstig, wenn die Fahrzeugkarosserie mittels der Drehvorrichtung in mehrere voneinander verschiedene Abtropfstellungen drehbar ist. Nimmt die Fahrzeugkarosserie nacheinander diese verschiedenen Abtropfstellungen ein, so kann das Naßmedium in jeder dieser Abtropfstellungen aus derjenigen Naßmedium-Sammelstelle besonders gut ablaufen, für welche das Ablaufverhalten in der betreffenden Abtropfstellung besonders günstig ist.

Außerdem entfällt durch die Möglichkeit, mittels ein und derselben Drehvorrichtung die Fahrzeugkarosserie in mehrere voneinander verschiedene Abtropfstellungen zu bewegen, die Notwendigkeit, für jede dieser Abtropfstellungen eine separate Dreh- oder Kippvorrichtung vorzusehen. Dadurch kann die erforderliche Gesamtlänge der Abtropfstation klein gehalten werden. Die Länge der Drehvorrichtung der Abtropfstation muß nur wenig größer sein als die Länge einer Fahrzeugkarosserie.

Um ein gutes Auslaufverhalten für das in der zu entleerenden Fahrzeugkarosserie enthaltene Naßmedium zu erzielen, ist es günstig, wenn die Drehachse der Drehvorrichtung im wesentlichen horizontal ausgerichtet ist.

Insbesondere kann vorgesehen sein, daß die Drehachse die Fahrzeugkarosserie nicht schneidet, sondern unterhalb oder oberhalb derselben angeordnet ist.

Da die Ablauföffnungen der Fahrzeugkarosserie (insbesondere die Frontscheiben- und Heckscheibenöffnung, die Motorhaube, der Kofferraumdeckel oder die Heckklappe sowie Öffnungen am vorderen oder hinteren Ende der Bodengruppe) häufig so angeordnet sind, daß das Naßmedium in der Längsrichtung der Karosserie besonders gut abläuft, ist es günstig, wenn die Drehachse der Drehvorrichtung quer zur Längsrichtung der an der Drehvorrichtung aufgenommenen Fahrzeugkarosserie, vorzugsweise im wesentlichen senkrecht zur Längsrichtung der Fahrzeugkarosserie ausgerichtet ist. Dadurch ist es möglich, die Längsrichtung der Fahrzeugkarosserie möglichst stark gegen die Horizontale zu neigen, um ein günstiges Auslaufverhalten beim Entleeren der Karosserie zu erzielen.

Wenn vorteilhafterweise vorgesehen ist, daß die Fahrzeugkarosserie mittels der Drehvorrichtung in zwei einander entgegengesetzte Drehrichtungen drehbar ist, so ist hierdurch gewährleistet, daß unabhängig von der Art und Abfolge der von der Fahrzeugkarosserie einzunehmenden Abtropfstellungen stets der kürzeste Drehweg zur Überführung der Fahrzeugkarosserie von der einen Abtropfstellung in die darauf folgende Abtropfstellung benutzt werden kann.

Um zu gewährleisten, daß die Fahrzeugkarosserie in jeder Abtropfstellung sicher an der Drehvorrichtung gehalten ist, ist vorteilhafterweise vorgesehen, daß die Abtropfstation eine Verriegelungseinrichtung umfaßt, mittels derer die Fahrzeugkarosserie an der Drehvorrichtung festlegbar ist.

Grundsätzlich kann vorgesehen sein, daß diese Verriegelungseinrichtung mittels eines Antriebs betätigt wird, welcher an einem Drehrahmen der Drehvorrichtung angeordnet ist und sich beim Drehen der Fahrzeugkarosserie mit derselben mitdreht.

In diesem Fall müssen jedoch elektrische Speise- und Steuerleitungen für den Verriegelungsantrieb bis auf den sich mit der Fahrzeugkarosserie mitdrehenden Teil der Drehvorrichtung geführt werden, was aufwendig ist und eine hohe Störanfälligkeit zur Folge hat. Außerdem muß ein an dem sich mit der Fahrzeugkarosserie mitdrehenden Teil der Drehvorrichtung angeordneter Verriegelungsantrieb mittels geeigneter Abdeckungen vor dem von der Fahrzeugkarosserie abtropfenden Naßmedium geschützt werden.

Um diese Nachteile zu vermeiden, ist bei einer bevorzugten Ausgestaltung der erfindungsgemäßen Abtropfstation vorgesehen, daß die Verriegelungseinrichtung einen sich mit der Fahrzeugkarosserie mitdrehenden Verriegelungsteil und einen sich nicht mit der Fahrzeugkarosserie mitdrehenden Antriebsteil umfaßt.

Der sich nicht mitdrehende, externe Antriebsteil kann ohne weiteres an ortsfeste Speise- und Steuerleitungen angeschlossen werden.

Da die Verriegelungseinrichtung lediglich kurz nach dem Einfahren einer Fahrzeugkarosserie in die Drehvorrichtung und kurz vor dem Ausfahren einer Fahrzeugkarosserie aus der Drehvorrichtung betätigt werden muß, ist es günstig, wenn die Verriegelungseinrichtung eine Kupplung umfaßt, mittels welcher eine Wirkverbindung zwischen dem Verriegelungsteil und dem Antriebsteil vor dem Drehen der Fahrzeugkarosserie lösbar und nach dem Drehen der Fahrzeugkarosserie wieder herstellbar ist, so daß die Drehbewegung der Drehvorrichtung durch den Antrieb der Verriegelungseinrichtung in keiner Weise behindert wird.

Ferner ist es günstig, wenn die Abtropfstation eine Abdeckung umfaßt, durch welche der Antriebsteil der Verriegelungseinrichtung vor dem von der Fahrzeugkarosserie abtropfenden Naßmedium geschützt ist. Insbesondere können die Seitenwände einer Kabine, in welcher die Drehvorrichtung der Abtropfstation untergebracht ist, als eine solche Abdeckung dienen.

Um die bei vorgegebener Taktzeit für jede Fahrzeugkarosserie zur Verfügung stehende Abtropfzeit zu verlängern, ist es von Vorteil, wenn die Drehvorrichtung zwei Aufnahmen für jeweils eine Fahrzeugkarosserie umfaßt. In diesem Fall können zwei. Fahrzeugkarosserien gleichzeitig von derselben Drehvorrichtung in Abtropfstellungen bewegt und in den Abtropfstellungen gehalten werden.

Bei einer bevorzugten Ausgestaltung der Erfindung ist vorgesehen, daß die beiden Aufnahmen für Fahrzeugkarosserien auf verschiedenen Seiten der Drehachse der Drehvorrichtung angeordnet sind. Dadurch ist es beispielsweise möglich, eine Fahrzeugkarosserie in die Drehvorrichtung einfahren oder aus derselben ausfahren zu lassen, während die zweite Fahrzeugkarosserie sich an der Drehvorrichtung in einer Abtropfstellung befindet.

Insbesondere kann vorgesehen sein, daß die beiden Aufnahmen für Fahrzeugkarosserien bezüglich der Drehachse im wesentlichen symmetrisch zueinander ausgebildet sind.

Um zu verhindern, daß die eine der beiden an der Drehvorrichtung aufgenommenen Fahrzeugkarosserien durch von der jeweils anderen Fahrzeugkarosserie abtropfendes Naßmedium verunreinigt wird, ist vorteilhafterweise vorgesehen, daß die beiden Aufnahmen für Fahrzeugkarosserien durch eine dazwischen angeordnete Trennwand voneinander getrennt sind.

Um eine gegenseitige Verschmutzung der Fahrzeugkarosserien durch ablaufendes Naßmedium zuverlässig zu verhindern, ist vorzugsweise vorgesehen, daß die Trennwand in der Längsrichtung der in den Aufnahmen aufgenommenen Fahrzeugkarosserien und quer zu dieser Längsrichtung über die in den Aufnahmen aufgenommenen Fahrzeugkarosserien übersteht.

Ferner ist es zum definierten Ableiten des auf die Trennwand gelangenden Naßmediums von Vorteil, wenn in der Trennwand Abflußrinnen ausgebildet sind, welche vorzugsweise im wesentlichen parallel zu der Längsrichtung der in den Aufnahmen aufgenommenen Fahrzeugkarosserien ausgerichtet sind.

Bislang wurden noch keine näheren Angaben dazu gemacht, in welcher Weise die Fahrzeugkarosserien auf die Drehvorrichtung gelangen.

Bei einer bevorzugten Ausgestaltung der erfindungsgemäßen Abtropfstation ist vorgesehen, daß die Aufnahme der Drehvorrichtung eine Rollenbahn zum Transport von auf Skidrahmen angeordneten Fahrzeugkarosserien umfaßt, an welcher sich der Skidrahmen in einer Standardstellung der in der Aufnahme aufgenommenen Fahrzeugkarosserie abstützt.

Unter einer Standardstellung der Fahrzeugkarosserie ist dabei eine Stellung zu verstehen, in welcher Fensteröffnungen der Fahrzeugkarosserie oberhalb der Bodengruppe der Fahrzeugkarosserie angeordnet sind.

Ist vorteilhafterweise vorgesehen, daß die Aufnahme der Drehvorrichtung eine weitere Rollenbahn umfaßt, an welcher sich der Skidrahmen der in der Aufnahme aufgenommenen Fahrzeugkarosserie in einer Kopfüberstellung der Fahrzeugkarosserie abstützt, so kann mittels dieser weiteren Rollenbahn eine in der Standardstellung in die Drehvorrichtung eingefahrene Fahrzeugkarosserie in der Kopfüberstellung aus derselben ausgefahren werden. Umgekehrt ist es auch möglich, eine in der Kopfüberstellung in die Drehvorrichtung eingefahrene Fahrzeugkarosserie in der Standardstellung aus derselben auszufahren.

Unter einer Kopfüberstellung der Fahrzeugkarosserie ist dabei eine solche Stellung der Fahrzeugkarosserie zu verstehen, in welcher Fensteröffnungen der Fahrzeugkarosserie unterhalb der Bodengruppe der Fahrzeugkarosserie angeordnet sind.

Eine mit zwei Rollenbahnen je Aufnahme versehene Drehvorrichtung kann daher - neben ihrer Entleerungsfunktion - zusätzlich dazu benutzt werden, Fahrzeugkarosserien von der Kopfüberstellung, in welcher die Fahrzeugkarosserien beispielsweise durch Tauchbäder in einer Beschichtungsanlage gefördert werden, in die Standardstellung zu überführen, in welcher die Fahrzeugkarosserien beispielsweise durch einen sich an die Beschichtungsanlage anschließenden Trockner gefördert werden. Eine zusätzliche Drehstation zur Überführung der Fahrzeugkarosserien von der Kopfüberstellung in die Standardstellung kann dann entfallen.

Grundsätzlich kann vorgesehen sein, daß ein Antrieb für die Rollenbahn oder die Rollenbahnen der Drehvorrichtung an dem sich mit der Fahrzeugkarosserie mitdrehenden Teil der Drehvorrichtung angeordnet ist.

Dies hat jedoch zur Folge, daß elektrische Speise- und Steuerleitungen für den Rollenbahn-Antrieb bis zu dem sich mit der Fahrzeugkarosserie mitdrehenden Teil der Drehvorrichtung geführt werden müssen, was konstruktiv aufwendig ist und eine hohe Störanfälligkeit mit sich bringt. Außerdem muß ein an dem sich mit der Fahrzeugkarosserie mitdrehenden Teil der Drehvorrichtung angeordneter Rollenbahn-Antrieb durch geeignete Abdeckungen vor dem von den Fahrzeugkarosserien abtropfenden Naßmedium geschützt werden.

Bei einer bevorzugten Ausgestaltung der erfindungsgemäßen Abtropfstation ist daher vorgesehen, daß die Abtropfetation einen Rollenbahn-Antriebsteil umfaßt, welcher sich nicht mit der Fahrzeugkarosserie mitdreht. Ein solcher Rollenbahn-Antriebsteil kann ohne weiteres mit ortsfesten elektrischen Speise- und Steuerleitungen verbunden werden.

Da die Rollenbahn oder die Rollenbahnen der Drehvorrichtung nur dann betätigt werden müssen, wenn eine Fahrzeugkarosserie auf die Drehvorrichtung einfahren oder von der Drehvorrichtung ausfahren soll, ist es von Vorteil, wenn die Abtropfstation eine Kupplung umfaßt, mittels welcher eine Wirkverbindung zwischen der Rollenbahn und dem Rollenbahn-Antriebsteil vor dem Drehen der Fahrzeugkarosserie lösbar und nach dem Drehen der Fahrzeugkarosserie wieder herstellbar ist, um zu erreichen, daß die Drehbewegung der Drehvorrichtung durch den Rollenbahn-Antriebsteil nicht behindert wird.

Um den Rollenbahn-Antriebsteil mit einer Rollenbahn der Drehvorrichtung in Wirkverbindung bringen zu können, kann vorgesehen sein, daß der Rollenbahn-Antriebsteil einen auf einen verschiebbaren Verschiebeschlitten angeordneten Antriebsmotor umfaßt.

Besonders günstig ist es, wenn der Rollenbahn-Antriebsteil zwei auf synchron zueinander verschiebbaren Verschiebeschlitten angeordnete Antriebsmotoren umfaßt. Dadurch ist es möglich, zwei Rollenbahnen der Drehvorrichtung gleichzeitig mit jeweils einem Antriebsmotor des Rollenbahn-Antriebsteils zu koppeln, so daß diese beiden Rollenbahnen gleichzeitig und unabhängig voneinander betätigt werden können.

Insbesondere ist es in diesem Fall möglich, gleichzeitig eine erste Fahrzeugkarosserie in eine erste Aufnahme der Drehvorrichtung hineinzufördern und eine zweite Fahrzeugkarosserie aus einer zweiten Aufnahme der Drehvorrichtung herauszufördern.

Ferner ist es günstig, wenn die Abtropfstation eine Abdeckung umfaßt, durch welche der Rollenbahn-Antriebsteil vor dem von den Fahrzeugkarosserien abtropfenden Naßmedium geschützt ist.

Insbesondere kann vorgesehen sein, daß die Seitenwände einer Kabine, in welcher die Drehvorrichtung der Abtropfstation angeordnet ist, als eine solche Abdeckung dienen.

Um das aus den zu entleerenden Fahrzeugkarosserien auslaufende oder von diesen Fahrzeugkarosserien abtropfende Naßmedium sammeln zu können, ist vorteilhafterweise vorgesehen, daß die Abtropfstation eine unterhalb der Drehvorrichtung angeordnete Sammelwanne zum Auffangen des Naßmediums umfaßt.

Um das gesammelte Naßmedium einer Weiterbehandlung, beispielsweise einer Reinigung, Wiederverwertung oder Entsorgung, zuführen zu können, ist es günstig, wenn der Boden der Sammelwanne ein Gefälle aufweist und eine Abflußöffnung an der tiefsten Stelle des Bodens angeordnet ist.

Bei einer bevorzugten Ausgestaltung der erfindungsgemäßen Abtropfstation ist vorgesehen, daß die Abtropfstation ein Steuergerät umfaßt, welches die Drehvorrichtung so steuert, daß diese die jeweils an der Drehvorrichtung angeordnete Fahrzeugkarosserie in eine oder mehrere dem jeweiligen Fahrzeugkarosserietyp zugeordnete Abtropfstellungen dreht. Hierdurch wird erreicht, daß jede in die Abtropfstation gelangende Fahrzeugkarosserie in die für den betreffenden Fahrzeugkarosserietyp günstigsten Abtropfstellungen bewegt wird und somit möglichst weitgehend entleert wird.

Der Typ der jeweils zu entleerenden Fahrzeugkarosserie kann dabei dem Steuergerät durch eine Datenleitung oder mittels eines geeigneten Eingabegeräts eingegeben werden; alternativ hierzu ist es möglich, daß die Abtropfstation einen Sensor aufweist, mittels dessen das Steuergerät den Typ der jeweils zu reinigenden Fahrzeugkarosserie selbsttätig erkennt und in Abhängigkeit von diesem Fahrzeugkarosserietyp die demselben zugeordneten Abtropfstellungen der Drehvorrichtung einstellt.

Insbesondere kann vorgesehen sein, daß die Fahrzeugkarosserien und/oder die dieselben tragenden Skidrahmen mit einem Identifikationssystem versehen sind, in welchem unter anderem Angaben zum Karosserietyp gespeichert sind, und daß die in den Identifiaktionssystem enthaltenen Angaben zum Karosserietyp vom Steuergerät mittels des Sensors ausgelesen werden.

Der vorliegenden Erfindung liegt die weitere Aufgabe zugrunde, ein Verfahren zum Entfernen eines Naßmediums aus Fahrzeugkarosserien der eingangs genannten Art zu schaffen, das es ermöglicht, Fahrzeugkarosserien jeden Typs möglichst weitgehend zu entleeren.

Diese Aufgabe wird bei einem Verfahren mit den Merkmalen des Oberbegriffs von Anspruch 26 erfindungsgemäß dadurch gelöst, daß die Fahrzeugkarosserie mittels einer Drehvorrichtung, deren Aufnahme um eine Drehachse der Drehvorrichtung frei drehbar ist, in mindestens eine beliebig vorgebbare Abtropfstellung gedreht und in dieser Abtropfstellung gehalten wird.

Besondere Ausgestaltungen des erfindungsgemäßen Verfahrens sind Gegenstand der Ansprüche 27 bis 46, deren Vorteile bereits vorstehend im Zusammenhang mit den besonderen Ausgestaltungen der erfindungsgemäßen Abtropfstation erläutert worden sind.

Weitere Merkmale und Vorteile der Erfindung sind Gegenstand der nachfolgenden Beschreibung und zeichnerischen Darstellung von Ausführungsbeispielen.

In den Zeichnungen zeigen:

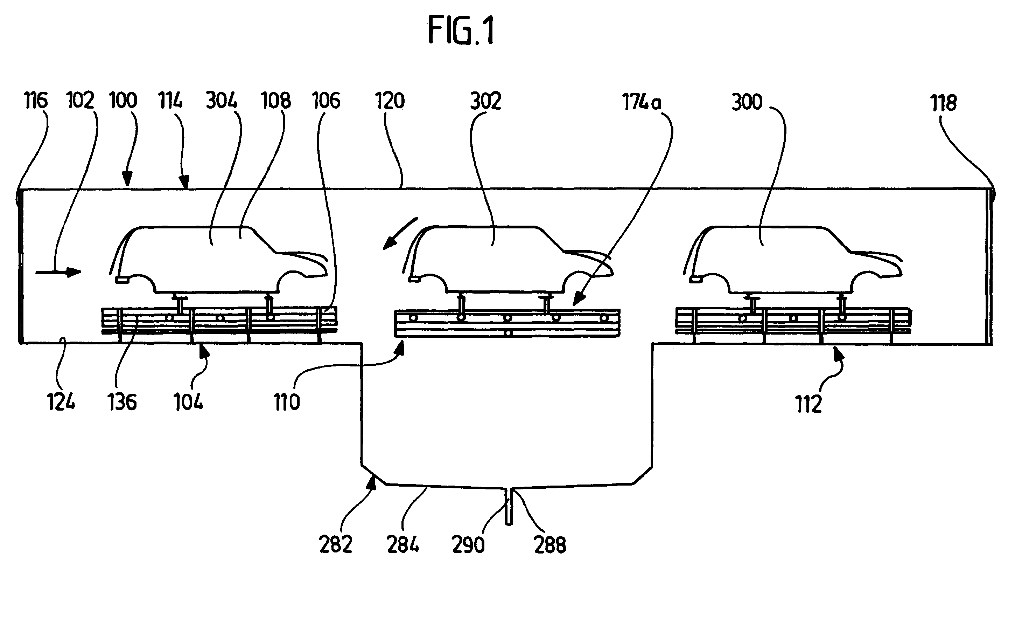

- Fig. 1: eine schematische Seitenansicht einer ersten Ausführungsform einer Abtropfstation, bei welcher die Fahrzeugkarosserien in Standardstellung von einer Zuführ-Rollenbahn auf die Drehvorrichtung und in Standardstellung von der Drehvorrichtung auf eine Abführ-Rollenbahn gefördert werden, in einem ersten Betriebszustand, in dem sich eine Fahrzeugkarosserie auf der Abführ-Rollenbahn befindet, eine zweite Karosserie an der Drehvorrichtung in einer Ausgangsstellung angeordnet ist, in welcher die Fahrzeugkarosserie nicht gegenüber der Horizontalen gedreht ist, und eine dritte Fahrzeugkarosserie sich auf der Zuführ-Rollenbahn befindet;

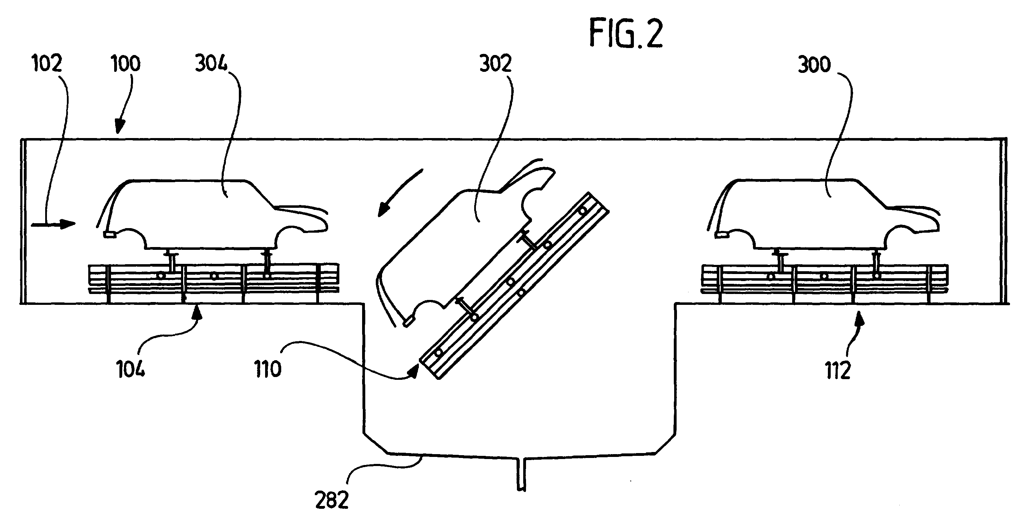

- Fig. 2: eine schematische Seitenansicht der Abtropfstation aus Fig. 1 in einem Betriebszustand, in dem sich die erste Fahrzeugkarosserie auf der Abführ-Rollenbahn befindet, die zweite Fahrzeugkarosserie an der Drehvorrichtung in einer ersten Abtropfstellung angeordnet ist, in welcher die zweite Fahrzeugkarosserie gegenüber der Horizontalen um einen Winkel von -45° gedreht ist, und die dritte Fahrzeugkarosserie sich auf der Zuführ-Rollenbahn befindet;

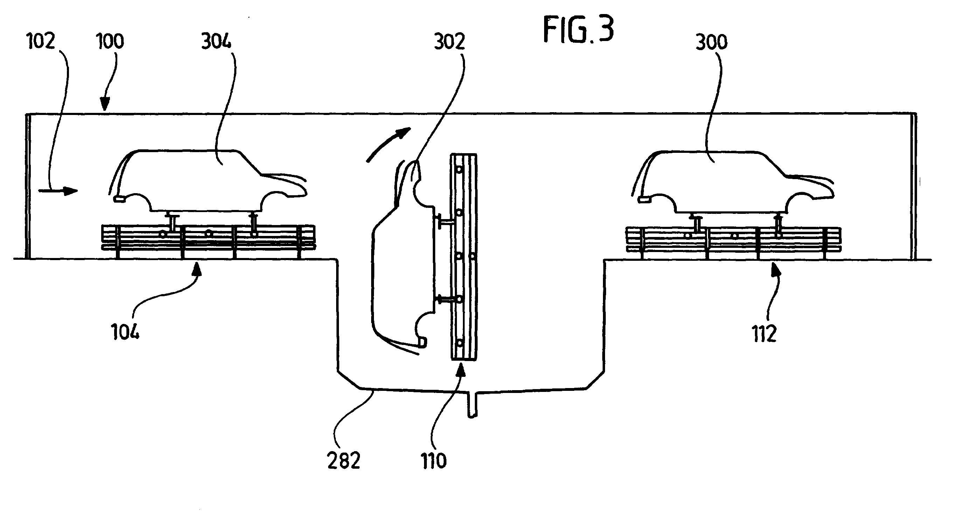

- Fig. 3: eine schematische Seitenansicht der Abtropfstation aus den Fig. 1 und 2 in einem Betriebszustand, in dem sich die erste Fahrzeugkarosserie auf der Abführ-Rollenbahn befindet, die zweite Fahrzeugkarosserie an der Drehvorrichtung in einer zweiten Abtropfstellung angeordnet ist, in welcher die zweite Fahrzeugkarosserie gegenüber der Horizontalen um einen Winkel von -90° gedreht ist, und die dritte Fahrzeugkarosserie sich auf der Zuführ-Rollenbahn befindet;

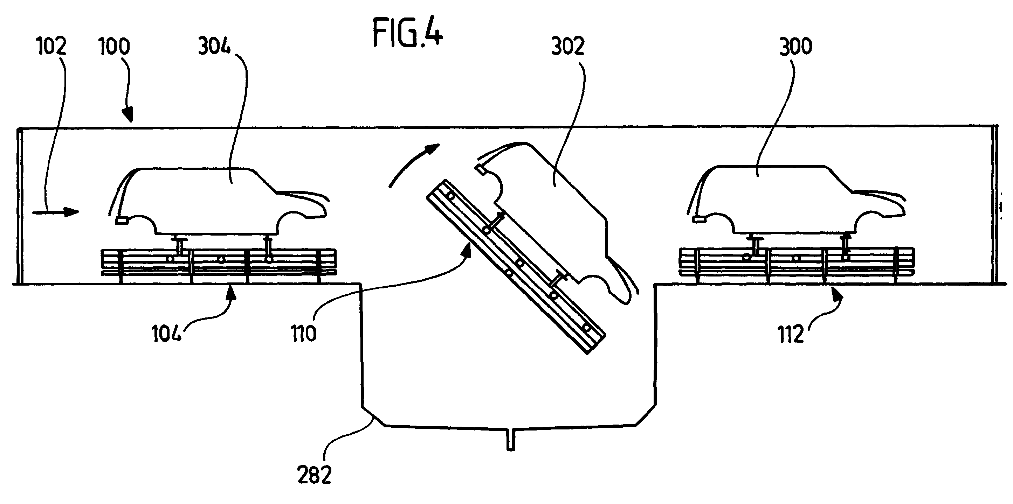

- Fig. 4: eine schematische Seitenansicht der Abtropfstation aus den Fig. 1 bis 3 in einem Betriebszustand, in dem sich die erste Fahrzeugkarosserie auf der Abführ-Rollenbahn befindet, die zweite Fahrzeugkarosserie an der Drehvorrichtung in einer dritten Abtropfstellung angeordnet ist, in welcher die zweite Fahrzeugkarosserie gegenüber der Horizontalen um einen Winkel von +45° gedreht ist, und die dritte Fahrzeugkarosserie sich auf der Zuführ-Rollenbahn befindet;

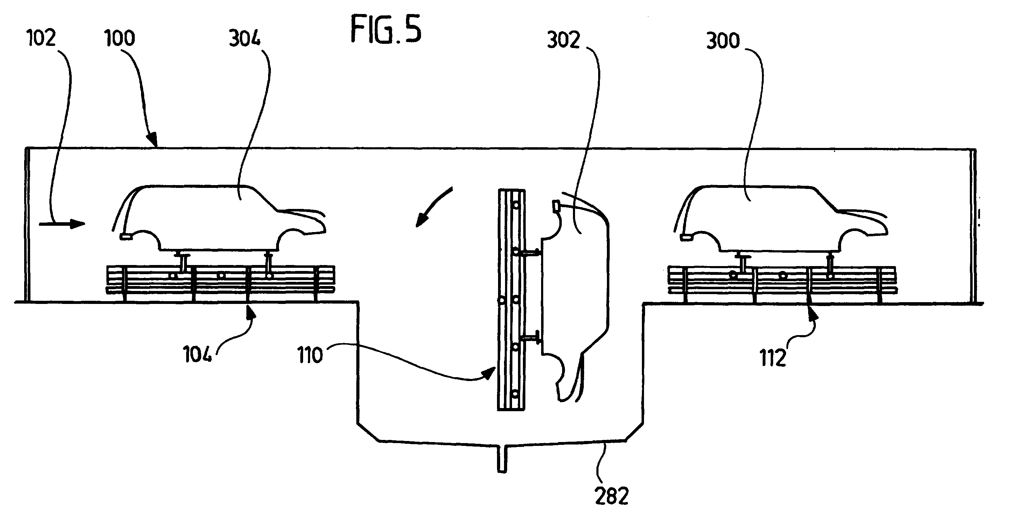

- Fig. 5: eine schematische Seitenansicht der Abtropfstation aus den Fig. 1 bis 4 in einem Betriebszustand, in dem sich die erste Fahrzeugkarosserie auf der Abführ-Rollenbahn befindet, die zweite Fahrzeugkarosserie an der Drehvorrichtung in einer vierten Abtropfstellung angeordnet ist, in welcher die zweite Fahrzeugkarosserie gegenüber der Horizontalen um einen Winkel von +90° gedreht ist, und die dritte Fahrzeugkarosserie sich auf der Zuführ-Rollenbahn befindet;

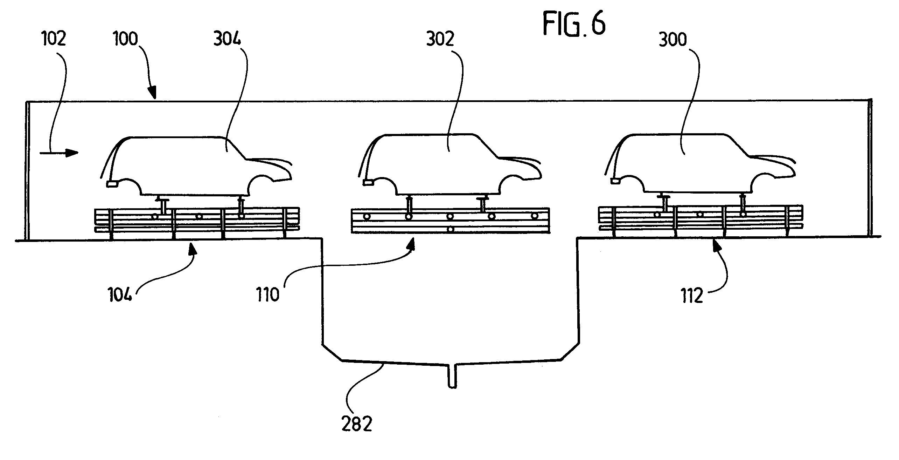

- Fig. 6: eine schematische Seitenansicht der Abtropfstation aus den Fig. 1 bis 5 in einem Betriebszustand, in dem sich die erste Fahrzeugkarosserie auf der Abführ-Rollenbahn befindet, die zweite Fahrzeugkarosserie an der Drehvorrichtung wieder in der Ausgangsstellung angeordnet ist und die dritte Fahrzeugkarosserie sich auf der Zuführ-Rollenbahn befindet;

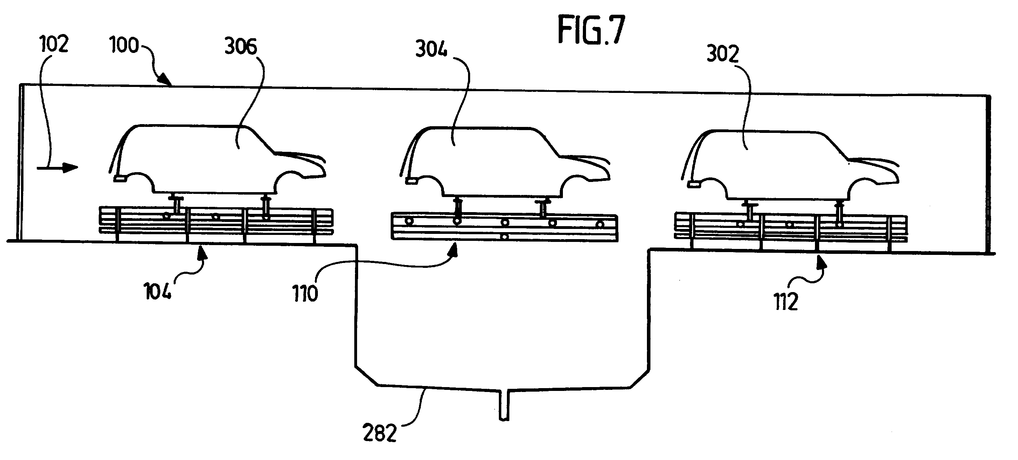

- Fig. 7: eine schematische Seitenansicht der Abtropfstation aus den Fig. 1 bis 6 in einem Betriebszustand, in dem die erste Fahrzeugkarosserie von der Abführ-Rollenbahn aus weitergefördert worden ist, die zweite Fahrzeugkarosserie von der Drehvorrichtung auf die Abführ-Rollenbahn gefördert worden ist, die dritte Fahrzeugkarosserie von der Zuführ-Rollenbahn auf die Drehvorrichtung gefördert worden ist und sich dort in der Ausgangsstellung befindet und eine vierte Fahrzeugkarosserie auf die Zuführ-Rollenbahn gefördert worden ist;

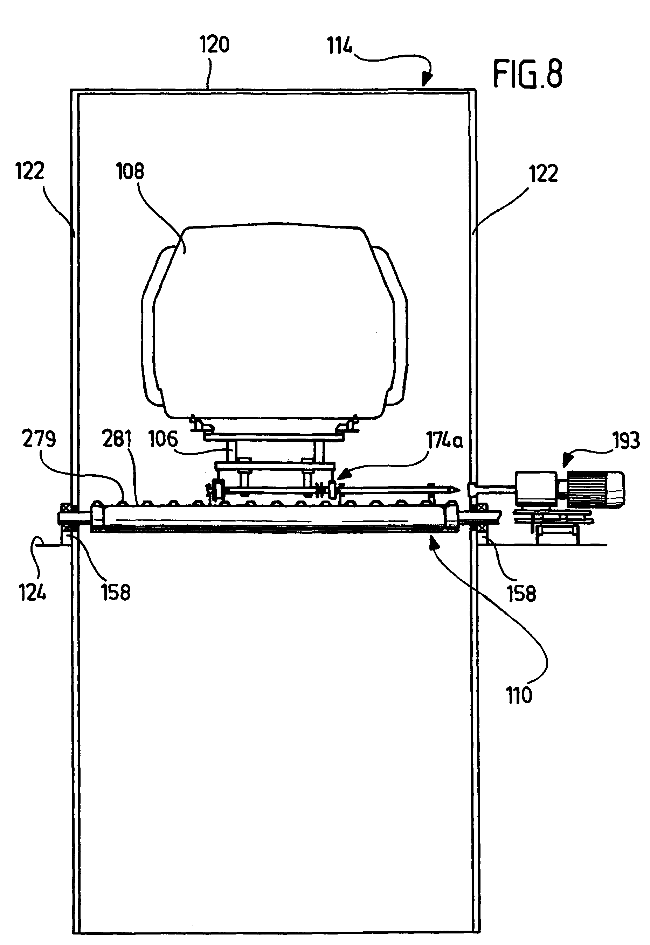

- Fig. 8: einen schematischen Querschnitt durch die Drehvorrichtung der Abtropfstation aus den Fig. 1 bis 7 in einem der Fig. 1 entsprechenden Betriebszustand;

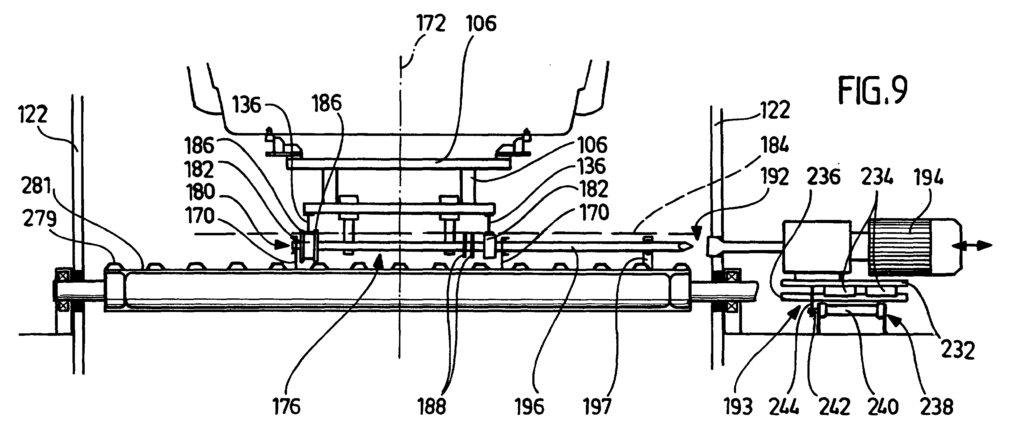

- Fig. 9: einen vergrößerten Ausschnitt aus der Fig. 8, welcher eine an der Drehvorrichtung angeordnete Rollenbahn im einzelnen darstellt;

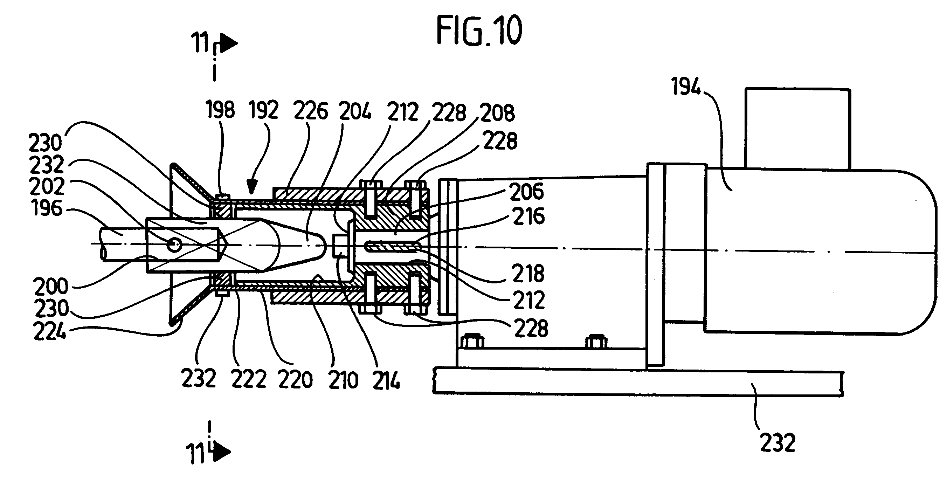

- Fig. 10: einen Längsschnitt durch eine Kupplung, welche die Rollenbahn mit einem externen Rollenbahn-Antriebsteil verbindet;

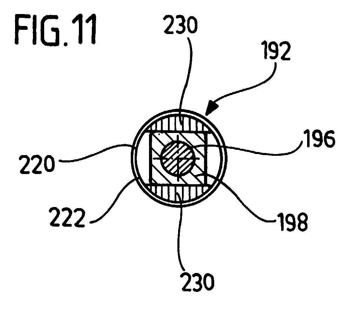

- Fig. 11: einen Querschnitt durch die Kupplung aus Fig. 10 längs der Linie 11-11 in Fig. 10;

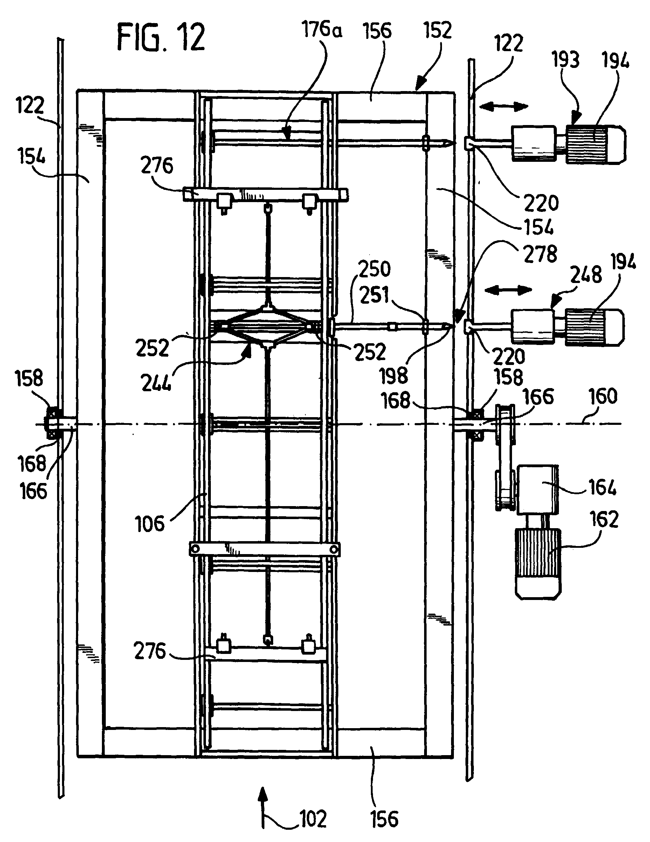

- Fig. 12: eine schematische Draufsicht auf die Drehvorrichtung der Abtropfstation aus den Fig. 1 bis 11;

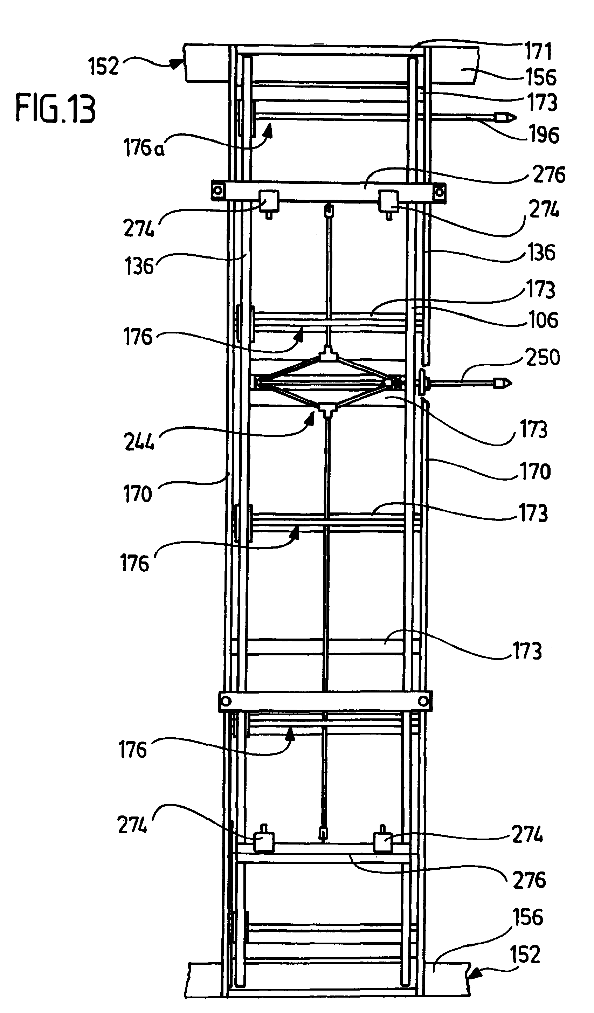

- Fig. 13: eine schematische Draufsicht auf die Rollenbahn der Drehvorrichtung aus Fig. 12 mit einem darauf angeordneten Skidrahmen;

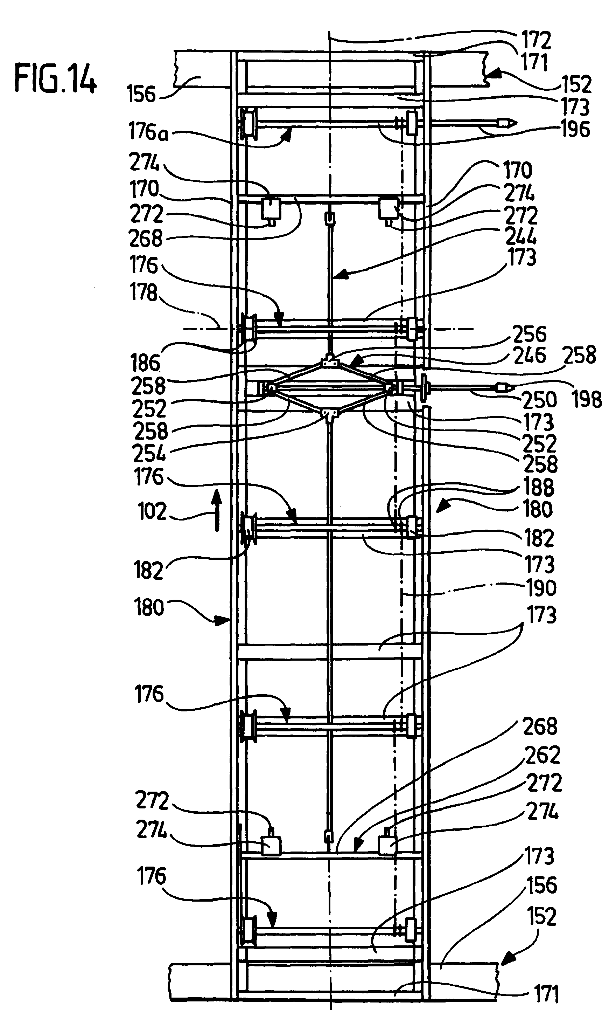

- Fig. 14: eine schematische Draufsicht auf die Rollenbahn aus Fig. 13 ohne Skidrahmen;

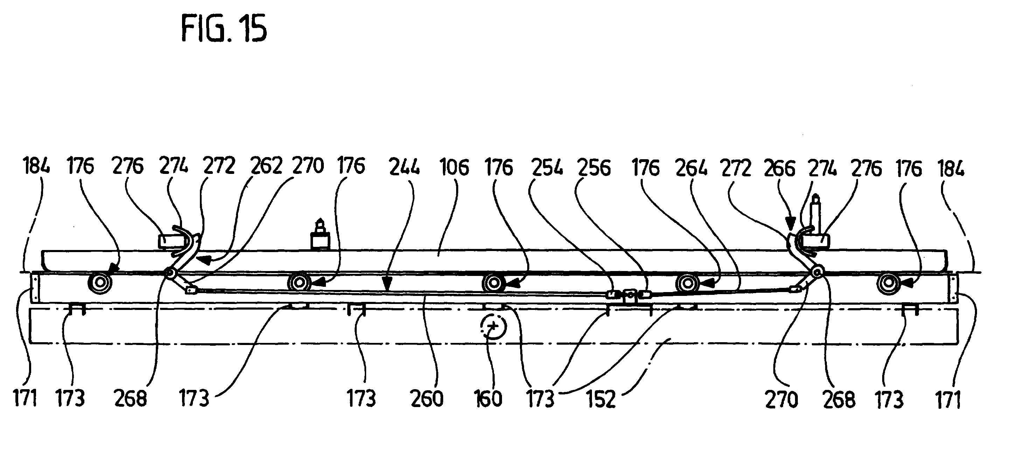

- Fig. 15: eine schematische Seitenansicht der Rollenbahn aus Fig. 13 mit einem darauf angeordneten Skidrahmen;

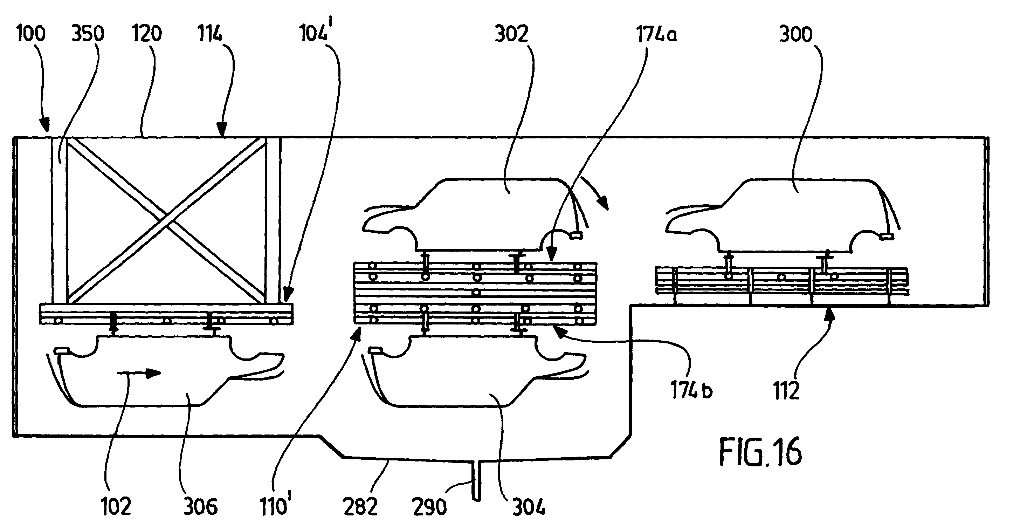

- Fig. 16: eine schematische Seitenansicht einer zweiten Ausführungsform einer Abtropfstation, bei welcher die Fahrzeugkarosserien in Kopfüberstellung von einer Zuführ-Rollenbahn auf die Drehvorrichtung und in Standardstellung von der Drehvorrichtung auf eine Abführ-Rollenbahn gefördert werden, in einem Betriebszustand, in welchem eine erste Fahrzeugkarosserie sich in Standardstellung auf der Abführ-Rollenbahn befindet, eine zweite Fahrzeugkarosserie an der Drehvorrichtung in einer Ausfahrstellung angeordnet ist, eine dritte Fahrzeugkarosserie an der Drehvorrichtung in einer Einfahrstellung angeordnet ist und eine vierte Fahrzeugkarosserie in Kopfüberstellung an der Zuführ-Rollenbahn angeordnet ist;

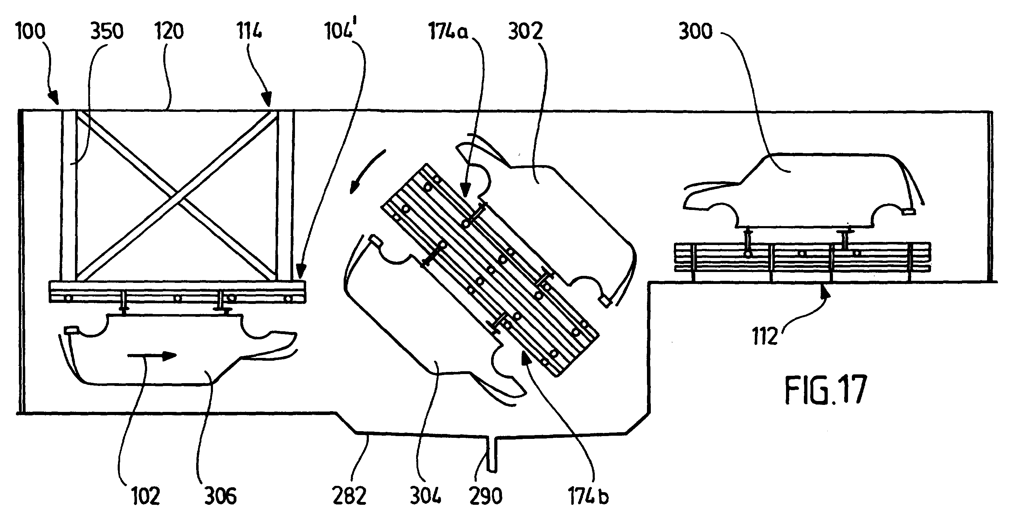

- Fig. 17: eine schematische Seitenansicht der Abtropfstation aus Fig. 16 in einem Betriebszustand, in dem die erste Fahrzeugkarosserie sich auf der Abführ-Rollenbahn befindet, die zweite Fahrzeugkarosserie an der Drehvorrichtung in einer ersten oberen Abtropfstellung angeordnet ist, in welcher die zweite Fahrzeugkarosserie um einen Winkel von +45° gegenüber der Horizontalen gedreht ist, die dritte Fahrzeugkarosserie an der Drehvorrichtung in einer ersten unteren Abtropfstellung angeordnet ist, in welcher die dritte Fahrzeugkarosserie um einen Winkel von +225° gegenüber der Horizontalen gedreht ist, und die vierte Fahrzeugkarosserie an der Zuführ-Rollenbahn angeordnet ist;

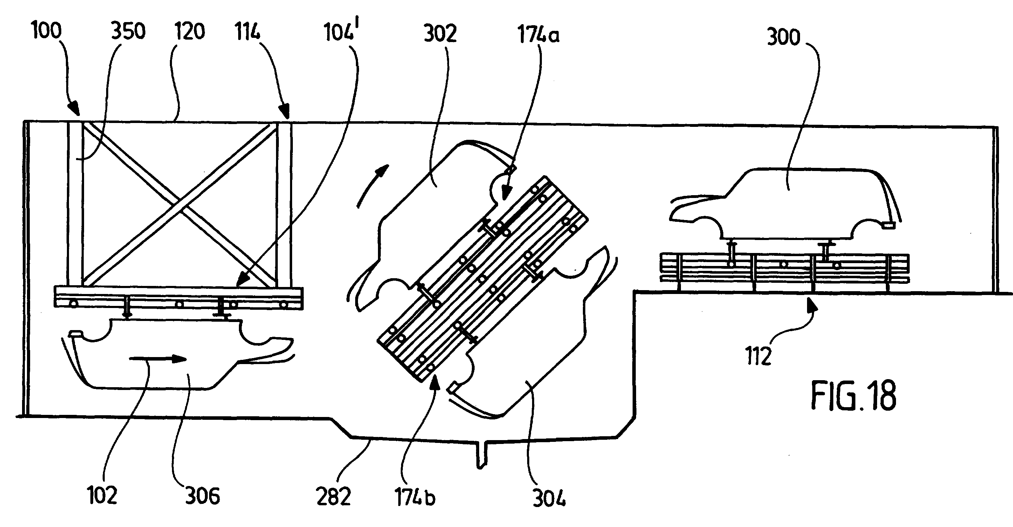

- Fig. 18: eine schematische Seitenansicht der Abtropfstation aus den Fig. 16 und 17 in einem Betriebszustand, in dem die erste Fahrzeugkarosserie sich auf der Abführ-Rollenbahn befindet, die zweite Fahrzeugkarosserie an der Drehvorrichtung in einer zweiten oberen Abtropfstellung angeordnet ist, in welcher die zweite Fahrzeugkarosserie um einen Winkel von -45° gegenüber der Horizontalen gedreht ist, die dritte Fahrzeugkarosserie an der Drehvorrichtung in einer zweiten unteren Abtropfstellung angeordnet ist, in welcher die dritte Fahrzeugkarosserie um einen Winkel von +135° gegenüber der Horizontalen gedreht ist, und die vierte Fahrzeugkarosserie an der Zuführ-Rollenbahn angeordnet ist;

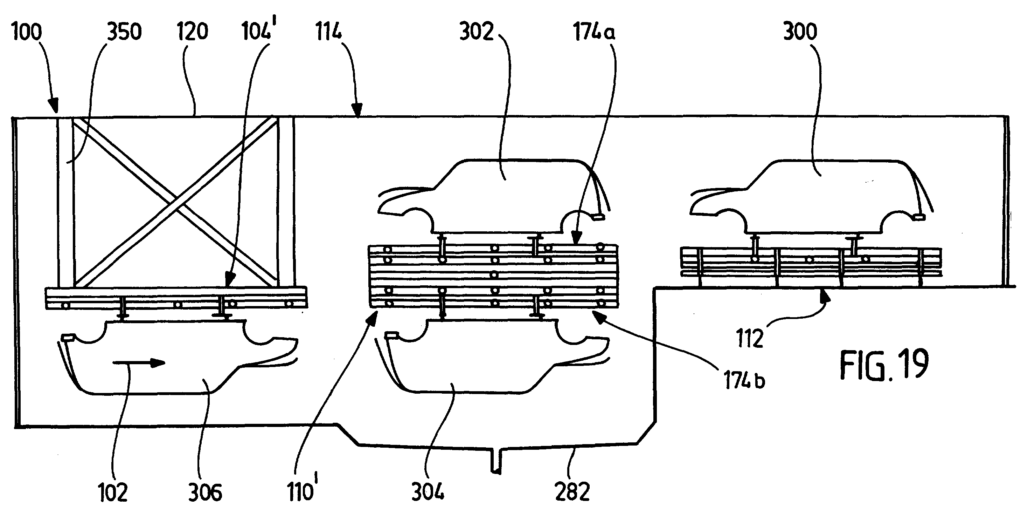

- Fig. 19: eine schematische Seitenansicht der Abtropfstation aus den Fig. 16 bis 18 in einem Betriebszustand, in dem die erste Fahrzeugkarosserie sich auf der Abführ-Rollenbahn befindet, die zweite Fahrzeugkarosserie an der Drehvorrichtung in der Ausfahrstellung angeordnet ist, die dritte Fahrzeugkarosserie an der Drehvorrichtung in der Einfahrstellung angeordnet ist und die vierte Fahrzeugkarosserie an der Zuführ-Rollenbahn angeordnet ist;

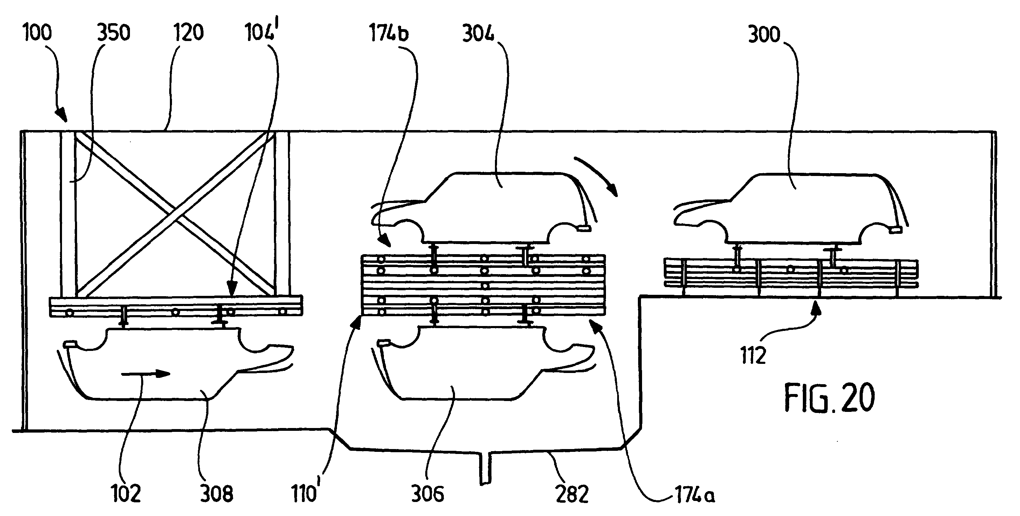

- Fig. 20: eine schematische Seitenansicht der Abtropfstation aus den Fig. 16 bis 19 in einem Betriebszustand, in dem die erste Fahrzeugkarosserie von der Abführ-Rollenbahn aus weitergefördert worden ist, die zweite Fahrzeugkarosserie in Standardstellung von der Drehvorrichtung auf die Abführ-Rollenbahn gefördert worden ist, die dritte Fahrzeugkarosserie an der Drehvorrichtung in der Ausfahrstellung angeordnet ist, die vierte Fahrzeugkarosserie von der Zuführ-Rollenbahn auf die Drehvorrichtung weitergefördert worden ist und an der Drehvorrichtung in der Ausgangsstellung angeordnet ist und eine fünfte Fahrzeugkarosserie in Kopfüberstellung auf die Zuführ-Rollenbahn gefördert worden ist;

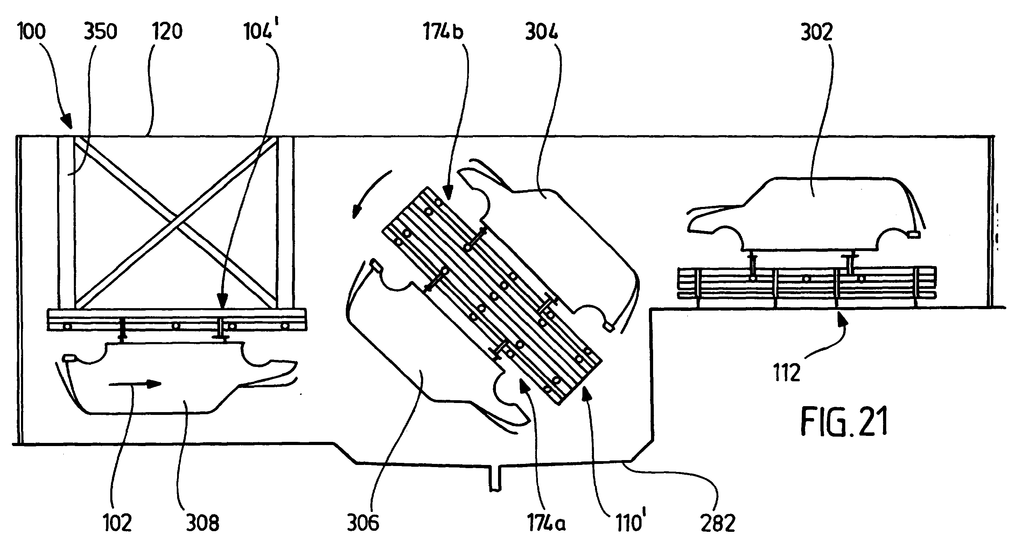

- Fig. 21: eine schematische Seitenansicht der Abtropfstation aus den Fig. 16 bis 20 in einem Betriebszustand, in dem die zweite Fahrzeugkarosserie sich auf der Abführ-Rollenbahn befindet, die dritte Fahrzeugkarosserie an der Drehvorrichtung in der ersten oberen Abtropfstellung angeordnet ist, in welcher die dritte Fahrzeugkarosserie gegenüber der Horizontalen um einen Winkel von +45° gedreht ist, die vierte Fahrzeugkarosserie an der Drehvorrichtung in der ersten unteren Abtropfstellung angeordnet ist, in welcher die vierte Fahrzeugkarosserie gegenüber der Horizontalen um einen Winkel von +225° gedreht ist, und die fünfte Fahrzeugkarosserie an der Zuführ-Rollenbahn angeordnet ist;

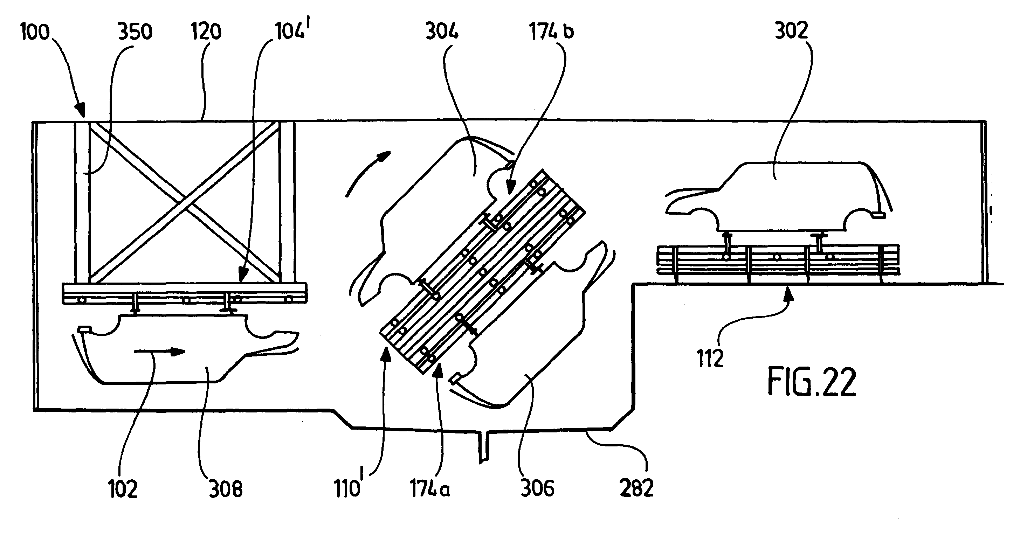

- Fig. 22: eine schematische Seitenansicht der Abtropfstation aus den Fig. 16 bis 21 in einem Betriebszustand, in dem die zweite Fahrzeugkarosserie sich auf der Abführ-Rollenbahn befindet, die dritte Fahrzeugkarosserie an der Drehvorrichtung in der zweiten oberen Abtropfstellung angeordnet ist, in welcher die dritte Fahrzeugkarosserie gegenüber der Horizontalen um einen Winkel von -45° gedreht ist, die vierte Fahrzeugkarosserie an der Drehvorrichtung in der zweiten unteren Abtropfstellung angeordnet ist, in welcher die vierte Fahrzeugkarosserie gegenüber der Horizontalen um einen Winkel von +135° gedreht ist, und die fünfte Fahrzeugkarosserie an der Zuführ-Rollenbahn angeordnet ist;

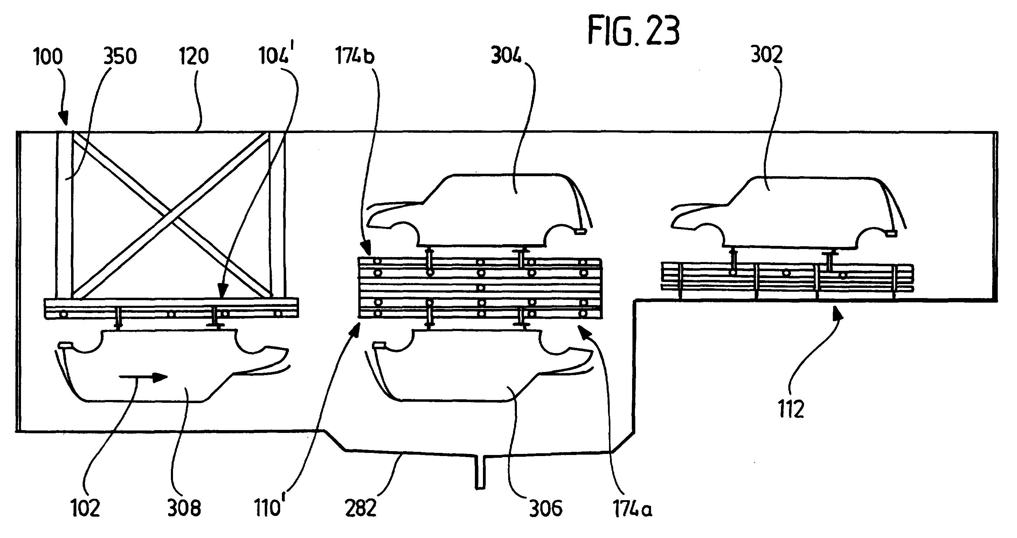

- Fig. 23: eine schematische Seitenansicht der Abtropfstation aus den Fig. 16 bis 22 in einem Betriebszustand, in dem die zweite Fahrzeugkarosserie auf der Abführ-Rollenbahn angeordnet ist, die dritte Fahrzeugkarosserie an der Drehvorrichtung in der Ausfahrstellung angeordnet ist, die vierte Fahrzeugkarosserie an der Drehvorrichtung in der Einfahrstellung angeordnet ist und die fünfte Fahrzeugkarosserie an der Zuführ-Rollenbahn angeordnet ist;

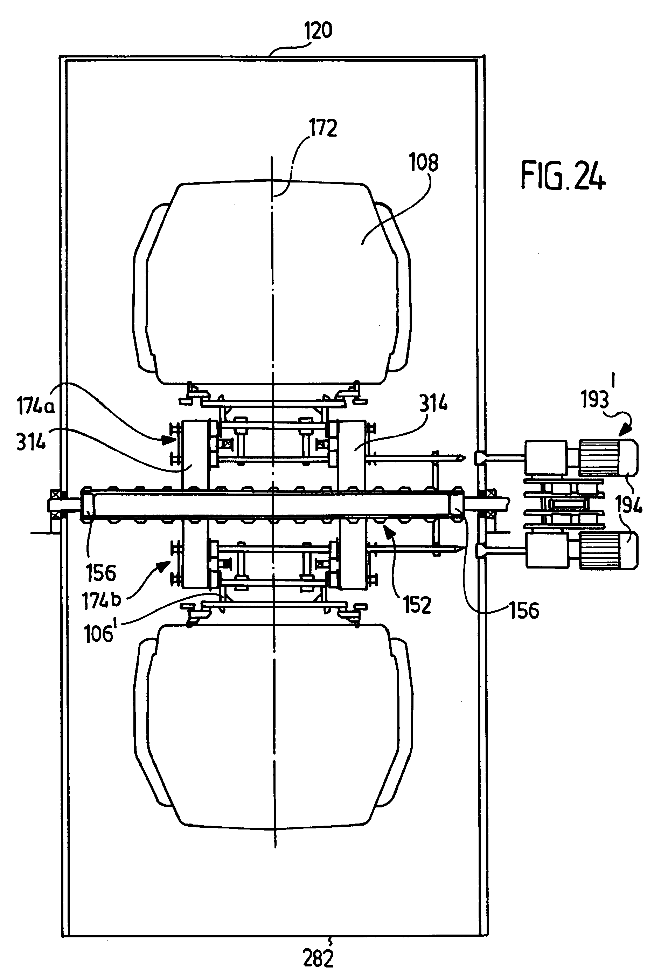

- Fig. 24: einen schematischen Querschnitt durch die Drehvorrichtung der Abtropfstation aus den Fig. 16 bis 23;

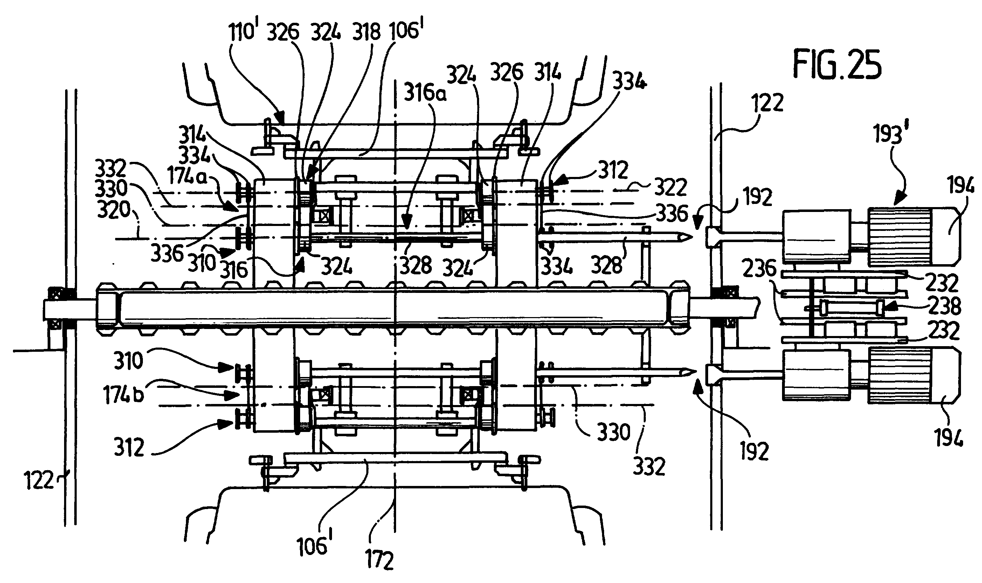

- Fig. 25: einen vergrößerten Ausschnitt aus Fig. 24, welcher die an der Drehvorrichtung angeordneten Rollenbahnen im einzelnen darstellt;

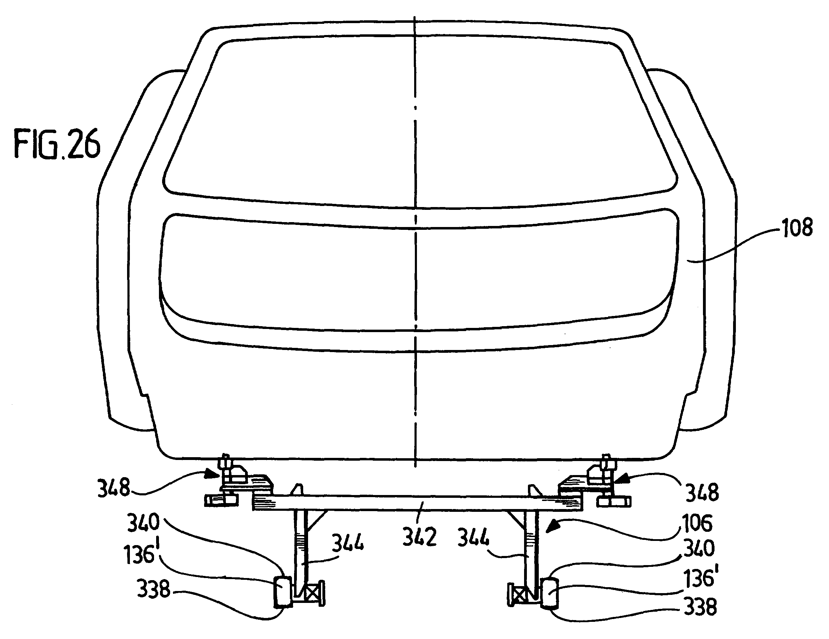

- Fig. 26: einen schematischen Querschnitt durch einen bei der zweiten Ausführungsform der Abtropfstation verwendeten Skidrahmen; und

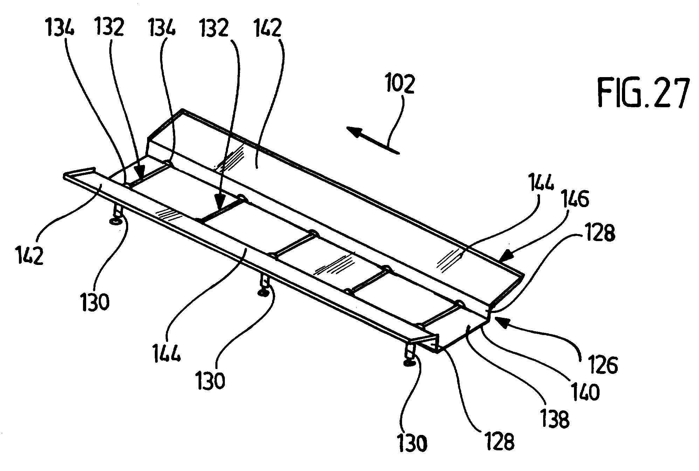

- Fig. 27: eine schematische perspektivische Darstellung einer Rollenbahn mit einem Naßmedium-Auffangsystem.

Gleiche oder funktional äquivalente Elemente sind in allen Figuren mit denselben Bezugszeichen bezeichnet.

Eine in den Fig. 1 bis 15 dargestellte, als Ganzes mit 100 bezeichnete erste Ausführungsform einer Abtropfstation für Fahrzeugkarosserien umfaßt eine eingangsseitige Zuführ-Rollenbahn 104 zum horizontalen Transport von an Skidrahmen 106 angeordneten Fahrzeugkarosserien 108 längs der Förderrichtung 102, das heißt in der Darstellung der Fig. 1 bis 7 von links nach rechts, wobei sich die Fahrzeugkarosserien 108 in einer Standardstellung befinden, in welcher Fensteröffnungen der Fahrzeugkarosserien 108 oberhalb der Bodengruppe der Fahrzeugkarosserien 108 angeordnet sind.

In der Förderrichtung 102 schließt sich an die eingangsseitige Zuführ-Rollenbahn 104 eine Drehvorrichtung 110 an, welcher dazu dient, die Fahrzeugkarosserien 108 durch Drehung um der Drehvorrichtung 110 durch ein (nicht dargestelltes) Steuergerät vorgegebene Drehwinkel in fahrzeugkarosserietypabhängige Abtropfstellungen zu überführen.

Längs der Förderrichtung 102 schließt sich an die Drehvorrichtung 110 eine ausgangsseitige Abführ-Rollenbahn 112 an, auf welche die Fahrzeugkarosserien 108 von der Drehvorrichtung 110 aus gefördert werden und von wo aus die Fahrzeugkarosserien 108 zur Weiterbehandlung, beispielsweise in einem Trockner, weitergefördert werden.

Die Zuführ-Rollenbahn 104, die Drehvorrichtung 110 und die Abführ-Rollenbahn 112 sind zusammen in einer Kabine 114 untergebracht, welche eine Vorderwand 116 mit einer Eintrittsöffnung für die Fahrzeugkarosserien 108, eine Rückwand 118 mit einer Austrittsöffnung für die Fahrzeugkarosserien 108, eine Deckenwand 120 und Seitenwände 122 (siehe Fig. 8) aufweist und auf einem im wesentlichen ebenen Untergrund 124 angeordnet ist.

Die Zuführ-Rollenbahn 104 und die ebenso ausgebildete Abführ-Rollenbahn 112 umfassen, wie am besten aus Fig. 27 zu ersehen ist, ein sich längs der Förderrichtung 102 erstreckendes, im wesentlichen rechteckiges Gestell 126 mit zwei senkrecht zur Förderrichtung 102 voneinander beabstandeten Längsträgern 128 und Stützfüßen 130, mit denen sich das jeweilige Gestell 126 an dem Untergrund 124 abstützt.

In dem Gestell 126 sind in der Förderrichtung 102 hintereinander jeweils mehrere Tragrollen 132 drehbar gelagert, auf denen zylindrische Tragkörper 134 angeordnet sind, deren obere Tragkörperkuppen eine im wesentlichen ebene Stützfläche für die Skidkufen 136 der Skidrahmen 106 bilden.

Aufgrund der Reibung zwischen den Skidkufen 136 und den Tragkörpern 134 werden die Skidrahmen 106 längs der Förderrichtung 102 vorwärts bewegt, wenn sich die Tragrollen 132 mit den daran angeordneten Tragkörpern 134 drehen. Die Tragrollen 132 der Rollenbahnen 104, 112 werden dabei in an sich bekannter Weise von (nicht dargestellten) elektrischen Getriebemotoren mittels Zahnriemen-Übertrieben angetrieben.

Wie ferner aus Fig. 27 zu ersehen ist, sind die Rollenbahn 104 und die ebenso ausgebildete Rollenbahn 112 mit jeweils einer integrierten Auffangwanne 138 versehen, welche an dem Gestell 126 gehalten ist und sich in der Förderrichtung 102 über die gesamte Länge der betreffenden Rollenbahn 104, 112 und quer zur Förderrichtung 102 vom einen der Längsträger 128 zum jeweils anderen erstreckt. Der Boden 140 jeder Auffangwanne 138 ist geneigt und mit mehreren (nicht dargestellten) Abflußöffnungen versehen, an welche eine (ebenfalls nicht dargestellte) Naßmedium-Abführleitung angeschlossen ist.

Ferner umfaßt jede der Rollenbahnen 104, 112 Abtropfelemente 142 in Form von Ableitblechen 144, welche zu beiden Seiten der Längsmittelebene der betreffenden Rollenbahn 104, 112 angeordnet und zu der Auffangwanne 138 hin geneigt sind, so daß Naßmedium von den Ableitblechen 144 in die Auffangwanne 138 abfließen kann.

Die Abtropfelemente 142 und die Auffangwanne 138 jeder der Rollenbahnen 104, 112 bilden zusammen ein Auffangsystem 146 für das Naßmedium, welches aus dem Bereich oberhalb der jeweiligen Rollenbahn zu der Rollenbahn gelangt.

Das von den auf den Rollenbahnen 104, 112 angeordneten Fahrzeugkarosserien 108 abtropfende Naßmedium wird entweder direkt von der jeweiligen Auffangwanne 138 aufgefangen oder aber von den Ableitblechen 144 aufgefangen und in die Auffangwanne 138 weitergeleitet, von wo das Naßmedium durch die Naßmedium-Abführleitung abfließt und einer Weiterbehandlung, beispielsweise einer Reinigung, Wiederverwertung oder Entsorgung, zugeführt wird.

Die zwischen der Zuführ-Rollenbahn 104 und der Abführ-Rollenbahn 112 angeordnete Drehvorrichtung 110 umfaßt, wie am besten aus Fig. 12 zu ersehen ist, einen rechteckigen Drehrahmen 152 mit zwei parallel zur Förderrichtung 102 ausgerichteten Längsträgern 154, welche mittels zweier Querträger 156 miteinander verbunden sind.

Der Drehrahmen 152 ist an zwei Lagerböcken 158 um eine senkrecht zur Förderrichtung 102 ausgerichtete horizontale Drehachse 160 drehbar gelagert. Die Lagerböcke 158 ruhen auf dem Untergrund 124, welcher auch die Kabine 114 trägt.

Der Antrieb der Drehbewegung des Drehrahmens 152 um die Drehachse 160 erfolgt mittels eines in Fig. 12 schematisch dargestellten Drehantriebsmotors 162, welcher über ein Getriebe 164 die in den Lagerböcken 158 gelagerte Welle 166 des Drehrahmens 152 dreht.

Die Welle 166 ist zu beiden Seiten des Drehrahmens 152 durch die jeweilige Seitenwand 122 der Kabine 114 hindurchgeführt, so daß die Seitenwände 122 der Kabine 114 als Abdeckungen dienen, durch welche der Drehantriebsmotor 162, das Getriebe 164 und die Lagerböcke 158 vor dem von den Fahrzeugkarosserien 108 abtropfenden Naßmedium geschützt sind.

Wie aus den Fig. 8 und 12 zu ersehen ist, sind die Durchtrittsöffnungen in den Seitenwänden 122, welche von der Welle 166 durchsetzt werden, mittels elastischer Dichtungen 168 abgedichtet.

An der Oberseite des Drehrahmens 152 ist eine Aufnahme 174a für eine auf einem Skidrahmen 106 angeordnete Fahrzeugkarosserie 108 vorgesehen.

Wie am besten aus Fig. 14 zu ersehen ist, tragen die Querträger 156 der Drehrahmens 152 zwei Längsrahmenträger 170 mit Z-förmigem Profil, welche sich parallel zur Förderrichtung 102 erstrecken und bezüglich einer Längsmittelebene 172 des Drehrahmens 152 symmetrisch zueinander ausgebildet sind.

Die Längsrahmenträger 170 sind an ihren vorderen und hinteren Enden mittels Endblechen 171 sowie durch zwischen den Endblechen 171 angeordnete, sich quer zur Längsrichtung der Längsrahmenträger 170 von dem einen Längsrahmenträger 170 zu dem anderen Längsrahmenträger 170 erstreckende Querstreben 173 mit U-förmigem oder C-förmigem Querschnitt verbunden.

An den Längsrahmenträgern 170 sind in der Längsrichtung derselben voneinander beabstandete Tragrollen 176 um senkrecht zur Förderrichtung 102 ausgerichtete horizontale Drehachsen 178 drehbar gelagert.

Die mehreren, beispielsweise fünf, Tragrollen 176, die äquidistant längs der Förderrichtung 102 angeordnet sind, bilden zusammen eine Rollenbahn 180 der Aufnahme 174a der Drehvorrichtung 110.

Wie aus Fig. 9 zu ersehen ist, umfaßt jede der Tragrollen 176 symmetrisch zur Längsmittelebene 172 angeordnete zylindrische Tragkörper 182, deren obere Tragkörperkuppen zusammen eine Stützfläche 184 für einen Skidrahmen 106 bilden.

Die (in der Förderrichtung 102 gesehen) links von der Längsmittelebene 172 angeordneten Tragkörper 182 sind mit Spurkränzen 186 zur seitlichen Führung der betreffenden Skidkufe 136 eines Skidrahmens 106 versehen.

Ferner trägt jede der Tragrollen 176, dem jeweiligen spurkranzlosen Tragkörper benachbart, zwei Zahnräder 188. Über jeweils ein Zahnrad 188 zweier einander benachbarter Tragrollen 176 ist jeweils eine Kette 190 gespannt, so daß die Zahnräder 188 und Ketten 190 zusammen einen Kettenübertrieb bilden, durch welchen die Drehung einer Tragrolle 176 auf die jeweils benachbarte Tragrolle 176 übertragen wird.

Eine der Tragrollen 176, beispielsweise die in der Förderrichtung 102 am weitesten hinten liegende Tragrolle 176a, wird mittels einer Kupplung 192 von einem elektrischen Getriebemotor 194 eines externen Rollenbahn-Antriebsteils 193 in Drehung versetzt.

Zu diesem Zweck ist die Welle 196 der Tragrolle 176a so verlängert, daß sie über den (in der Förderrichtung 102 gesehen) rechten Längsrahmenträger 170 zu der rechten Seitenwand 122 der Kabine 114 hin übersteht. Dieser überstehende Teil der Welle 196 ist in einer vom rechten Längsträger 154 des Drehrahmens 152 getragenen Stütze 197 drehbar gelagert.

Wie am besten aus den Fig. 10 und 11 zu ersehen ist, ist auf das freie Ende der Welle 196, welche einen kreisförmigen Querschnitt aufweist, ein im Querschnitt quadratischer Mitnahmebolzen 198 aufgeschoben, welcher an einer Stirnseite ein Sackloch 200 zur Aufnahme des freien Endes der Welle 196 aufweist.

Der Mitnahmebolzen 198 ist mittels eines in ein radial zu der Welle 196 verlaufendes Gewinde-Durchgangsloch des Mitnahmebolzens 198 eingeschraubten Gewindestifts 202 drehfest an der Welle 196 festgelegt.

Ein der Welle 196 abgewandtes Stirnende des Mitnahmebolzens 198 ist sich konisch verjüngend ausgebildet und mit einer gerundeten Spitze 204 versehen.

Der Mitnahmebolzen 198 und die Welle 196 bilden einen rollenbahnseitigen ersten Teil der Kupplung 192.

Ein antriebsteilseitiger zweiter Teil der Kupplung 192 ist drehfest mit einer Abtriebswelle 206 des Getriebemotors 194 verbunden.

Wie aus Fig. 10 zu ersehen ist, ist auf die Abtriebswelle 206 ein zylindrischer Innenring 208 mit einem gestuften axialen Durchgangsloch 210, dessen engerer, dem Getriebemotor 194 zugewandter Abschnitt 212 die Abtriebswelle 206 aufnimmt, aufgeschoben und mittels einer Stützscheibe 212 und einer die Stützscheibe 212 gegen die Schulter des gestuften Durchgangslochs 210 pressenden Zylinderkopfschraube 214, welche in ein stirnseitiges axiales Gewinde-Sackloch der Abtriebswelle 206 eingeschraubt ist, in axialer Richtung relativ zu der Abtriebswelle 206 fixiert. Eine drehfeste Verbindung zwischen der Abtriebswelle 206 und dem Innenring 208 wird mittels einer Paßfeder 216 hergestellt, welche in eine axial ausgerichtete Nut 218 am Umfang der Abtriebswelle 206 und eine hieran angrenzende axiale Nut an der Innenseite des engen Bereichs des gestuften Durchgangslochs 210 des Innenrings 208 eingreift. Diese (nicht dargestellte) Nut an dem Innenring 208 erstreckt sich in axialer Richtung des Innenrings 208 bis zu dessen dem Getriebemotor 194 zugewandter Stirnseite, damit der Innenring 208 bei in die Nut 218 der Abtriebswelle 206 eingesetzter Paßfeder 216 auf die Abtriebswelle 206 aufgeschoben werden kann.

Auf den Innenring 208 ist eine Aufnahmebuchse 220 aufgeschoben, welche einen dem Getriebemotor 194 zugewandten hohlzylindrischen Abschnitt 222 und einen dem Getriebemotor 194 abgewandten, sich konisch erweiternden Trichterabschnitt 224 umfaßt.

Auf die Aufnahmebuchse 220 wiederum ist ein hohlzylindrischer Außenring 226 aufgeschoben, welcher eine dickere Wandung als die Aufnahmebuchse 220 aufweist. Die Aufnahmebuchse 220 und der Außenring 226 sind mittels mehrerer Schrauben 228, welche radiale Durchgangslöcher in dem Außenring 226 und in der Aufnahmebuchse 220 durchsetzen und in radiale Gewinde-Sacklöcher in dem Innenring 208 eingeschraubt sind, drehfest mit dem Innenring 208 verbunden.

Wie aus den Fig. 10 und 11 zu ersehen ist, sind ferner in der Aufnahmebuchse 220, und zwar an dem trichterabschnittseitigen Ende des hohlzylindrischen Abschnitts 222 der Aufnahmebuchse 220, zwei kreisabschnittsförmige Mitnehmerelemente 230 angeordnet, welche mittels Schrauben 232, die radiale Durchgangslöcher in der Aufnahmebuchse 220 durchsetzen und in radiale Gewindesacklöcher in den Mitnehmerelementen 230 eingeschraubt sind, drehfest mit der Aufnahmebuchse 220 verbunden sind.

Die einander zugewandten Runder der Mitnehmerelemente 230 sind, wie aus Fig. 11 zu ersehen ist, parallel zueinander ausgerichtet und weisen einen solchen Abstand voneinander auf, daß die Mitnehmerelemente 230 den im Querschnitt quadratischen Abschnitt des Mitnahmebolzens 198 formschlüssig zwischen sich aufnehmen können.

Zum leichteren Einführen des Mitnahmebolzens 198 zwischen den Mltnehmerelementen 230 hindurch in den hohlzylindrischen Abschnitt 222 der Aufnahmebuchse 220 hinein sind die Mitnehmerelemente 230 an ihren der Abtriebswelle 206 abgewandten Stirnseiten angeschrägt.

Wie am besten aus Fig. 9 zu ersehen ist, ist der Getriebemotor 194 auf einem Verschiebeschlitten 232 angeordnet, welcher - beispielsweise mittels Wälzkörper-Umlaufführungen 234 - an einer Verschiebeführung 236 parallel zur Achse der Welle 196 verschiebbar geführt ist.

Um den Verschiebeschlitten 232 mit dem Getriebemotor 194 längs der Verschiebeführung 236 zu verschieben, ist eine Bewegungseinrichtung 238 vorgesehen, welche beispielsweise einen Pneumatikzylinder 240 mit einem darin verschiebbaren Kolben 242 umfaßt, welcher mittels einer Kopplungsstange 244 an dem Verschiebeschlitten 232 angreift, so daß der Verschiebeschlitten 232 in parallel zur Richtung der Achse der Welle 196 verschoben wird, wenn der Kolben 242 aus dem Pneumatikzylinder 240 herausbewegt oder in denselben hineinbewegt wird.

Der Getriebemotor 194, der Verschiebeschlitten 232, die Verschiebeführung 236 und die Bewegungseinrichtung 238 für den Verschiebeschlitten 232 bilden zusammen den externen Rollenbahn-Antriebsteil 193.

Zum Ankoppeln der Tragrolle 176a an den Rollenbahn-Antriebsteil 193 wird der Verschiebeschlitten 232 mit dem darauf angeordneten Getriebemotor 194 in radialer Richtung auf das mit dem Mitnahmebolzen 198 versehene Ende der Welle 196 zu verschoben, bis die Spitze 204 des Mitnahmebolzens 198 durch den Trichterabschnitt 224 und die Mitnehmerelemente 230 hindurch in den hohlzylindrischen Abschnitt 222 der Aufnahmebuchse 220 eintaucht. Dabei kommen zwei der Seitenwände des im Querschnitt quadratischen Abschnitts des Mitnahmebolzens 198 in Eingriff mit den Mitnehmerelementen 230, so daß eine drehfeste Verbindung zwischen der Welle 196 einerseits und der Abtriebswelle 206 des Getriebemotors 194 andererseits zustande kommt.

Nach Herstellung dieser drehfesten Verbindung wird bei Betätigung des Getriebemotors 194 die Welle 196 der Tragrolle 176a (und damit, mittels der Kettenübertriebe, sämtliche Tragrollen 176 der Rollenbahn 180) in Drehung versetzt, so daß ein Skidrahmen 106 mit darauf angeordneter Fahrzeugkarosserie 108 von der Zuführ-Rollenbahn 104 auf die Rollenbahn 180 der Drehvorrichtung 110 einfahren oder von der Rollenbahn 180 der Drehvorrichtung 110 auf die Abführ-Rollenbahn 112 ausfahren kann.

Um die Drehvorrichtung 110 nach einem solchen Transportvorgang wieder um die Drehachse 160 drehen zu können, wird der Verschiebeschlitten 232 mit dem darauf angeordneten Getriebemotor 194 nach Abschalten des Getriebemotors 194 in axialer Richtung der Welle 196 von derselben wegbewegt, so daß der Mitnahmebolzen 198 außer Eingriff mit den Mitnehmerelementen 230 kommt und die Verbindung zwischen der Welle 196 und der Abtriebswelle 206 des Getriebemotors 196 unterbrochen ist.

Wie aus den Fig. 8 und 9 zu ersehen ist, kann die Drehantriebsverbindung zwischen dem Getriebemotor 194 und der angetriebenen Tragrolle 176a nur dann hergestellt werden, wenn sich die Rollenbahn 180 in der Ausgangsstellung befindet, in welcher die Stützfläche 184 der Rollenbahn 180 horizontal ausgerichtet ist und sich auf demselben Niveau befindet wie die Stützflächen der Zuführ-Rollenbahn 104 und der Abführ-Rollenbahn 112. In den Fig. 8 und 9 trifft dies nur auf die jeweils oben dargestellte Rollenbahn 180 der ersten Aufnahme 174a, nicht jedoch auf die darunter dargestellte Rollenbahn 180 der zweiten Aufnahme 174b der Drehvorrichtung 110 zu.

Wie bereits erwähnt, ist ein auf die Rollenbahn 180 aufgefahrener Skidrahmen 106 in Bezug auf den Drehrahmen 152 gegen eine Relativbewegung parallel zu den Drehachsen 178 der Tragrollen 176 durch die Spurkränze 186 an den rechtsseitigen Tragkörpern 182 gesichert.

Eine Sicherung des Skidrahmens 106 gegen eine Relativbewegung relativ zu den Drehrahmen 152 in Längsrichtung des Drehrahmens 152 oder senkrecht zur Stützfläche 184 der Rollenbahn 180 erfolgt mittels einer Verriegelungseinrichtung 244, welche im folgenden beschrieben wird.

Die Verriegelungseinrichtung 244 umfaßt einen sich bei einer Drehung des Drehrahmens 152 mit demselben mitdrehenden Verriegelungsteil 246 und einen bei einer Drehung des Drehrahmens 152 sich nicht mitdrehenden Antriebsteil 248.

Der Verriegelungsteil 246 umfaßt eine parallel zu den Drehachsen 178 der Tragrollen 176 ausgerichtete Gewindespindel 250, welche an den Längsrahmenträgern 170 und an einer vom rechten Querträger 154 getragenen Stütze 251 drehbar gelagert ist.

Die Gewindespindel 250 trägt zwei Gewindemuttern 252, welche seitlich so geführt sind, daß sie sich bei einer Drehung der Gewindespindel 250 nicht mitdrehen, sondern, je nach Drehrichtung, aufeinander zu oder voneinander weg bewegen.

Eine vordere Schubplatte 254 und eine hintere Schubplatte 256 sind mittels Schubstäben 258 so mit den beiden Gewindemuttern 252 gelenkig verbunden, daß die vier Schubstäbe 258 eine Raute bilden.

Wie am besten aus Fig. 15 zu ersehen ist, ist die vordere Schubplatte 254 über eine vordere Schubstange 260 gelenkig mit einer vorderen Klammer 262 und die hintere Schubplatte 256 über eine hintere Schubstange 264 gelenkig mit einer hinteren Klammer 266 verbunden.

Die beiden Klammern 262, 266 umfassen jeweils eine drehbar an den Konsolen 170 der Rollenbahn 180 gehaltene Welle 268, von der sich in radialer Richtung ein kurzer Hebel 270 weg erstreckt, an welchem die vordere Schubstange 260 bzw. die hintere Schubstange 264 angelenkt ist.

Ferner umfaßt jede der Klammern 262, 266 zwei senkrecht zur Förderrichtung 102 voneinander beabstandete lange Hebel 272, welche sich im wesentlichen senkrecht zu dem kurzen Hebel 270 radial von der Welle 268 weg erstrecken und an ihrem freien Ende jeweils einen im Querschnitt C-förmigen Bügel 274 tragen.

In der in Fig. 15 dargestellten Schließstellung der Verriegelungseinrichtung 244 umgreifen die C-förmigen Bügel 274 der Klammern 262, 266 jeweils eine Quertraverse 276 eines auf der Rollenbahn 180 angeordneten Skidrahmens 106 von oben, von unten und von hinten bzw. von vorne, so daß der Skidrahmen 106 relativ zu den Klammern 262, 266 in Längsrichtung des Drehrahmens 152 und senkrecht zur Stützfläche 184 der Rollenbahn 180 festgelegt ist.

Um den auf der Rollenbahn 180 festgelegten Skidrahmen 106 freizugeben, müssen die Klammern 262, 266 um die jeweilige Welle 268 von der betreffenden Quertraverse 262 weg geschwenkt werden. Wie aus Fig. 15 zu ersehen ist, ist es hierzu erforderlich, die Schubplatten 254 und 256 voneinander weg zu bewegen. Wie ferner aus den Fig. 13 oder 14 zu ersehen ist, müssen hierzu die Gewindemuttern 252 aufeinander zu bewegt werden. Ein an der Rollenbahn 180 angeordneter Skidrahmen 106 kann somit mittels der Verriegelungseinrichtung 244 an der Rollenbahn 180 verriegelt oder freigegeben werden, indem die Gewindespindel 250 in geeigneter Richtung in Drehung versetzt wird.

Zur Erzeugung einer solchen Drehbewegung wird der vorstehend beschriebene, sich mit dem Drehrahmen 152 mitdrehende Verriegelungsteil 246 der Verriegelungseinrichtung 244 mit dem in Fig. 12 dargestellten externen Verriegelungs-Antriebsteil 248 mittels einer Kupplung 278 verbunden.

Der erste, verriegelungsteilseitige Teil der Kupplung 278 wird durch den über den rechten Längsrahmenträger 170 seitlich überstehenden Teil der Gewindespindel 250 und einen an dessen Ende angeordneten Mitnahmebolzen 198 gebildet.

Der an der Gewindespindel 250 angeordnete Mitnahmebolzen 198 ist in derselben Weise ausgebildet wie der vorstehend bereits im Zusammenhang mit dem Antrieb der Rollenbahn 180 beschriebene Mitnahmebolzen 198, so daß auf dessen vorstehende Beschreibung verwiesen wird.

Der zweite, antriebsteilseitige Teil der Kupplung 278 und der Verriegelungs-Antriebsteil 248 selbst sind in derselben Weise ausgebildet wie der antriebsteilseitige Teil der Kupplung 192 und der die Tragrollen 176 der Rollenbahn 180 antreibende Rollenbahn-Antriebsteil 193, so daß insoweit ebenfalls auf die vorstehende Beschreibung Bezug genommen wird.

Es ist somit in derselben Weise möglich, den Getriebemotor 194 des Antriebsteils 248 der Verriegelungseinrichtung 244 mittels der Kupplung 278 mit dem Verriegelungsteil 246 der Verriegelungseinrichtung 244 in Wirkverbindung zu setzen, wenn sich die Rollenbahn 180 in der Ausgangsstellung befindet, wie dies vorstehend bereits für die Herstellung der Verbindung zwischen dem Getriebemotor 194 des Rollenbahn-Antriebsteils 193 beschrieben worden ist.

Wie aus Fig. 12 zu ersehen ist, sind die Antriebsteile 193, 248, insbesondere die Getriebemotoren 194, außerhalb der Kabine 114 angeordnet und durchsetzen die Aufnahmebuchsen 220 Durchtrittsöffnungen in den Seitenwänden 122 der Kabine 114, so daß die betreffende Seitenwand 122 als Abdeckung dient, durch welche der Rollenbahn-Antriebsteil 193 und der Verriegelungs-Antriebsteil 248 vor dem aus den Fahrzeugkarosserien 108 auslaufenden oder von den Fahrzeugkarosserien abtropfenden Naßmedium geschützt sind.

Wie am besten aus den Fig. 1 bis 7 zu ersehen ist, ist unterhalb der Drehvorrichtung 110 eine Sammelwanne 282 angeordnet, deren Boden 284 ein zur Mitte des Bodens hin gerichtetes Gewelle aufweist und an seiner tiefsten Stelle mit einer Abflußöffnung 288 versehen ist.

Die Abflußöffnung 288 ist an eine Naßmedium-Abführleitung 290 angeschlossen, durch welche das in der Sammelwanne 282 aufgefangene Naßmedium einer Weiterbehandlung, beispielsweise einer Reinigung, Wiederverwertung oder Entsorgung, zugeführt werden kann.

Um aus einer an der Drehvorrichtung 110 gehaltenen Fahrzeugkarosserie 108 auslaufendes oder von dieser Fahrzeugkarosserie abtropfendes Naßmedium in definierter Weise in die Sammelwanne 282 abzuleiten, ist an der Oberseite des Drehrahmens 152 eine Trennwand 279 vorgesehen, welche parallel zum Drehrahmen 152 ausgerichtet ist und sowohl in der Längsrichtung der in der Aufnahme 174a aufgenommenen Fahrzeugkarosserie als auch quer zu dieser Längsrichtung über die in der Aufnahme 174a aufgenommene Fahrzeugkarosserie übersteht.

Die Trennwand 279 ist mit parallel zur Längsrichtung des Drehrahmens 152 verlaufenden Abflußrinnen 281 versehen, welche beispielsweise einen trapezförmigen Querschnitt aufweisen. Durch diese Abflußrinnen 281 wird auf die Trennwand 279 gelangendes Naßmedium in definierter Weise zu dem vorderen oder zu dem hinteren Ende des Drehrahmens 152 (je nach der momentanen Neigung des Drehrahmens 152) geleitet, von wo das Naßmedium in die Sammelwanne 282 abtropft.

Die vorstehend beschriebene erste Ausführungsform einer Abtropfstation 100 funktioniert wie folgt:

In einem in Fig. 1 dargestellten Betriebszustand befindet sich eine erste Fahrzeugkarosserie 300 auf der Abführ-Rollenbahn 112. Eventuell von der ersten Fahrzeugkarosserie 300 abtropfendes Naßmedium wird von dem Auffangsystem 146 der Abführ-Rollenbahn 112 aufgefangen und in der Auffangwanne 138 gesammelt.

Wird die Abtropfstation 100 nach einer kathodischen Elektrotauchlackierung (KTL) und vor dem Eintritt in einen Trockner eingesetzt, so handelt es sich bei dem von den Fahrzeugkarosserien abtropfenden Naßmedium um KTL-Lack.

In dem in Fig. 1 dargestellten Betriebszustand ist ferner in der Aufnahme 174a der Drehvorrichtung 110 eine zweite Fahrzeugkarosserie 302 aufgenommen, welche sich in einer Ausgangsstellung befindet, in welcher die zweite Fahrzeugkarosserie 302 noch nicht gegenüber der Horizontalen gedreht ist.

Von der zweiten Fahrzeugkarosserie 302 in der Ausgangsstellung abtropfendes Naßmedium gelangt zunächst in die Abflußrinnen 281 der Trennwand 279, strömt in diesen Abflußrinnen 281 bis ans vordere oder hintere Ende der Trennwand 279 und tropft von dort in die Sammelwanne 282.

Ferner ist in dem in Fig. 4 dargestellten Betriebszustand eine dritte Fahrzeugkarosserie 304 auf der Zuführ-Rollenbahn 104 angeordnet. Von der dritten Fahrzeugkarosserie 304 abtropfendes Naßmedium wird von dem Auffangsystem 146 der Zuführ-Rollenbahn 104 aufgefangen, in der Auffangwanne 138 gesammelt und durch die Naßmedium-Abführleitung einer Weiterbehandlung zugeführt.

Aus der in Fig. 1 dargestellten Ausgangsstellung wird der Drehrahmen 152 mittels des Drehantriebsmotors 162 (in der Blickrichtung in Fig. 1 im Gegenuhrzeigersinn) um -45° um die horizontale Drehachse 160 gedreht, bis der in Fig. 2 dargestellte Betriebszustand erreicht ist.

Nach Abschluß der Drehung um -45° befindet sich die zweite Fahrzeugkarosserie 302 in einer ersten Abtropfstellung, in welcher diese Fahrzeugkarosserie um -45° gegenüber der Horizontalen gedreht ist.

In dieser Abtropfstellung kann Naßmedium, das sich in der Bodenwanne der Fahrzeugkarosserie 302 angesammelt hat, durch Öffnungen am hinteren Ende der Bodengruppe aus der Fahrzeugkarosserie 302 ablaufen.

Nachdem die Fahrzeugkarosserie 302 während einer vorgegebenen Abtropftaktzeit in der ersten Abtropfstellung gehalten worden ist, wird der Drehrahmen 152 mittels des Drehantriebsmotors 162 (in der Blickrichtung der Fig. 2 im Gegenuhrzeigersinn) um weitere -45° um die horizontale Drehachse 160 gedreht, bis der in Fig. 3 dargestellte Betriebszustand erreicht ist.

Nach Abschluß der weiteren Drehung um -45° befindet sich die zweite Fahrzeugkarosserie 302 in einer zweiten Abtropfstellung, in welcher diese Fahrzeugkarosserie um -90° gegenüber der Horizontalen gedreht ist.

In dieser zweiten Abtropfstellung kann Naßmedium, das sich im Innenraum der Fahrzeugkarosserie 302 angesammelt hat, längs der Bodengruppe und der Dachinnenseite nach unten abfließen und durch Öffnungen am unteren Ende der Bodengruppe und durch die geöffnete Heckklappe oder den geöffneten Kofferraumdeckel der Fahrzeugkarosserie 302 ablaufen, um in die Sammelwanne 282 zu gelangen.

Nach Ablauf einer vorgegebenen Abtropftaktzeit wird der Drehrahmen 152 mittels des Drehantriebsmotors 162 (in der Blickrichtung der Fig. 3 im Uhrzeigersinn) um +135° um die horizontale Drehachse 160 gedreht, bis der in Fig. 4 dargestellte Betriebszustand erreicht ist.

Nach Abschluß der Drehung um +135° befindet sich die zweite Fahrzeugkarosserie 302 in einer dritten Abtropfstellung, in welcher diese Fahrzeugkarosserie um +45° gegenüber der Horizontalen gedreht ist.

In dieser dritten Abtropfstellung kann Naßmedium, das sich in der Bodenwanne der Fahrzeugkarosserie 302 angesammelt hat, durch Öffnungen am vorderen Ende der Bodengruppe dieser Fahrzeugkarosserie nach außen abfließen.

Nachdem die zweite Fahrzeugkarosserie 302 während einer vorgegebenen Abtropftaktzeit in der dritten Abtropfstellung gehalten worden ist, wird der Drehrahmen 152 mittels des Drehantriebsmotors 162 (in der Blickrichtung der Fig. 4 im Uhrzeigersinn) um weitere +45° um die horizontale Drehachse 160 gedreht, bis der in Fig. 5 dargestellte Betriebszustand erreicht ist.

Nach Abschluß dieser weiteren Drehung um +45° befindet sich die zweite Fahrzeugkarosserie 302 in einer vierten Abtropfstellung, in welcher diese Fahrzeugkarosserie um +90° gegenüber der Horizontalen gedreht ist.

In dieser vierten Abtropfstellung kann Naßmedium, das sich im Innenraum der Fahrzeugkarosserie 302 angesammelt hat, längs der Dachinnenseite und der Bodengruppe der Karosserie nach unten fließen und durch Öffnungen am vorderen Ende der Bodengruppe und durch die geöffnete Motorhaube auslaufen.

Nachdem die zweite Fahrzeugkarosserie 302 während einer vorgegebenen Abtropftaktzeit in der vierten Abtropfstellung gehalten worden ist, wird der Drehrahmen 152 mittels des Drehantriebsmotors 162 (in der Blickrichtung der Fig. 5 im Gegenuhrzeigersinn) um -90° um die horizontale Drehachse 160 gedreht, bis der in Fig. 6 dargestellte Betriebszustand erreicht ist.

Nach Abschluß der Drehung um -90° befindet sich die zweite Fahrzeugkarosserie 302 wieder in der Ausgangsstellung, in welcher diese Fahrzeugkarosserie nicht gegenüber der Horizontalen gedreht ist.

Mit erneutem Erreichen der Ausgangsstellung ist der Abtropfzyklus für die zweite Fahrzeugkarosserie 302 in der Drehvorrichtung 110 abgeschlossen, so daß diese Karosserie aus der Drehvorrichtung 110 ausgefahren werden kann.

Hierzu wird von einem (nicht dargestellten) Steuergerät der Abtropfstation 100, welche den Drehantriebsmotor 162, den Rollenbahn-Antriebsteil 193, den Verriegelungs-Antriebsteil 248 sowie die Antriebe der Zuführ-Rollenbahn 104 und der Abführ-Rollenbahn 112 steuert, der Antrieb der Abführ-Rollenbahn 112 betätigt, so daß die erste Fahrzeugkarosserie 300 (in der Darstellung der Fig. 6 nach rechts) aus der Abtropfstation 100 hinaus in einen sich daran anschließenden Karosserie-Trocknungsabschnitt gefördert wird.

Anschließend werden der Rollenbahn-Antriebsteil 193 und der Verriegelungs-Antriebsteil 148 der Verriegelungseinrichtung 244 in der vorstehend beschriebenen Weise mittels der Kupplungen 192 bzw. 278 mit der Welle 196 der Tragrolle 176a bzw. mit der Gewindespindel 250 verbunden. Darauf werden nacheinander die Getriebemotoren 194 des Verriegelungs-Antriebsteils 148 und des Rollenbahn-Antriebsteils 193 betätigt, um erst die Verriegelung des Skidrahmens 106 der zweiten Fahrzeugkarosserie 302 zu lösen und anschließend die zweite Fahrzeugkarosserie 302 mittels der Rollenbahn 180 der Aufnahme 174a der Drehvorrichtung 110 auf die Abführ-Rollenbahn 112 zu fördern.

Anschließend wird die dritte Fahrzeugkarosserie 304 durch Betätigen des Antriebs der Zuführ-Rollenbahn 104 auf die Rollenbahn 180 der Aufnahme 174a der Drehvorrichtung 110 gefördert und dort verriegelt, indem die Drehrichtung des Getriebemotors 194 des Antriebsteils 248 der Verriegelungseinrichtung 244 umgekehrt wird.

Eine vierte Fahrzeugkarosserie 306 wird (in der Darstellung der Fig. 6 gesehen von links) aus dem in der Förderrichtung 102 vor der Abtropfstation 100 liegenden Bereich auf die Zuführ-Rollenbahn 104 gefördert.

Die Antriebsteile 193 und 248 der Rollenbahn 180 bzw. der Verriegelungseinrichtung 244 werden durch Verschieben der jeweiligen Verschiebeschlitten 233 von der Welle 196 bzw. von der Gewindespindel 250 abgekoppelt.

Damit ist der in Fig. 7 dargestellte Betriebszustand der Abtropfstation 100 erreicht, und ein weiterer Abtropfzyklus für die an der Drehvorrichtung 110 angeordnete dritte Fahrzeugkarosserie 304 beginnt.

Bei der vorstehenden Beschreibung der Funktion der ersten Ausführungsform der Abtropfstation 100 wurde aus Gründen der Vereinfachung davon ausgegangen, daß die Fahrzeugkarosserien in der Drehvorrichtung 110 in vier verschiedene Abtropfstellungen gebracht werden, in denen die Fahrzeugkarosserien gegenüber der Horizontalen um die Winkel -45°, -90°, +45° bzw. +90° gedreht sind. Je nach dem Typ der von Naßmedium zu entleerenden Fahrzeugkarosserien kann jedoch auch eine geringere oder eine größere Zahl von Abtropfstellungen vorgesehen sein, und die Fahrzeugkarosserien können in diesen Reinigungsstellungen um beliebige andere Winkel, beispielsweise um +60° und -60°, gegenüber der Horizontalen gedreht sein.

Ferner ist es nicht erforderlich, daß die Drehrichtung während des Abtropfvorgangs an der Drehvorrichtung gewechselt wird; vielmehr kann vorgesehen sein, daß der Drehrahmen der Drehvorrichtung unter Beibehaltung der Drehrichtung von einer Abtropfstellung zur nächsten weitergedreht wird.

Das Steuergerät der Abtropfstation wählt je nach dem Typ der zu entleerenden Fahrzeugkarosserie die für diesen Karosserietyp vorgegebenen Abtropfstellungen und die zugehörigen Abtropfzeiten aus.

Der Typ der zu reinigenden Fahrzeugkarosserien wird dem Steuergerät entweder über eine Datenleitung oder durch ein geeignetes Eingabegerät eingegeben, oder aber die Abtropfstation ist mit einem Sensor versehen, mit dessen Hilfe das Steuergerät den Typ der zu reinigenden Fahrzeugkarosserien selbsttätig erkennt.

Eine in den Fig. 16 bis 26 dargestellte zweite Ausführungsform der Abtropfstation 100 unterscheidet sich von der vorstehend beschriebenen ersten Ausführungsform dadurch, daß die Fahrzeugkarosserien 108 in die Drehvorrichtung 110' der zweiten Ausführungsform nicht in der Standardstellung, in welcher Fensteröffnungen der Fahrzeugkarosserien 108 oberhalb der jeweiligen Bodengruppe angeordnet sind, einfahren, sondern in einer Kopfüberstellung, in welcher die Fensteröffnungen der Fahrzeugkarosserien 108 unterhalb der Bodengruppe angeordnet sind.

Um die Fahrzeugkarosserien 108 in der Kopfüberstellung in die Drehvorrichtung 110' einfahren zu können, umfaßt die Aufnahme 174a der Drehvorrichtung 110' nicht nur, wie bei der ersten Ausführungsform, eine einzige Rollenbahn, sondern eine untere Rollenbahn 310 und eine obere Rollenbahn 312, deren Aufbau im folgenden beschrieben wird.

Außerdem ist neben der ersten Aufnahme 174a für eine Fahrzeugkarosserie 108 an der Oberseite des Drehrahmens 152 an dessen Unterseite eine zweite Aufnahme 174b für eine weitere auf einem Skidrahmen angeordnete Fahrzeugkarosserie 108 vorgesehen.

Die beiden Aufnahmen 174a, 174b sind bezüglich einer die Drehachse 160 und die Längsrichtung des Drehrahmens 152 enthaltende Ebene spiegelsymmetrisch zueinander ausgebildet, so daß im folgenden nur die in den Fig. 24 und 25 oben dargestellte erste Aufnahme 174a im Detail beschrieben werden wird.

Die Drehvorrichtung 110' der zweiten Ausführungsform weist also insgesamt vier Rollenbahnen auf.

Die Querträger 156 des Drehrahmens 152 der Drehvorrichtung 110' tragen zwei Konsolen 314 (siehe Fig. 21 und 22), welche sich parallel zur Längsrichtung des Drehrahmens 152 erstrecken und bezüglich der Längsmittelebene 172 des Drehrahmens 152 symmetrisch zueinander ausgebildet sind.

In den Konsolen 314 sind untere Tragrollen 316 und obere Tragrollen 318 um senkrecht zur Längsrichtung des Drehrahmens 152 ausgerichtete horizontale Drehachsen 320 bzw. 322 drehbar gelagert.

Jede der Tragrollen 316, 318 umfaßt zwei zylindrische Tragkörper 324, die in Richtung der Drehachsen 320 bzw. 322 voneinander beabstandet sind und die mit Spurkränzen 326 zur seitlichen Führung eines Skidrahmens versehen sind.

Nur die Tragkörper 324 einer einzigen direkt angetriebenen unteren Tragrolle 316a sind mittels einer Welle 328 drehfest miteinander verbunden; die Tragkörper 324 der übrigen Tragrollen 316, 318 sind nicht direkt miteinander verbunden.

Die Tragkörper 324 der unteren Tragrollen 316 weisen eine gemeinsame obere Tangentialebene auf, welche eine untere Stützfläche 330 für einen Skidrahmen bildet.

In entsprechender Weise weisen die Tragkörper 324 der oberen Tragrollen 318 eine gemeinsame untere Tangentialebene auf, welche eine obere Stützfläche 332 für einen Skidrahmen bildet.

Die unteren Tragrollen 316 bilden zusammen die untere Rollenbahn 310 der Aufnahme 174a, während die oberen Tragrollen 318 zusammen die obere Rollenbahn 312 der Aufnahme 174a bilden.

Jede der Tragrollen 316, 318 umfaßt jeweils vier Zahnräder 334, von denen jedem Tragkörper 324 der Tragrolle jeweils zwei zugeordnet sind, welche zusammen mit auf den Zahnrädern 334 aufliegenden Zahnketten Kettenübertriebe zum Übertragen einer Drehbewegung von jeweils einer Tragrolle auf eine dieser Tragrolle benachbarte Tragrolle bilden.

Insbesondere ist mittels Ketten 336 die Übertragung einer Drehbewegung von der direkt angetriebenen unteren Tragrolle 316a auf die unmittelbar darüber angeordnete obere Tragrolle 318 möglich.

Die Welle 328 der direkt angetriebenen unteren Tragrolle 316a ist in derselben Weise mittels einer Kupplung 192 mit einem externen Rollenbahn-Antriebsteil 193' verbindbar, wie dies bereits vorstehend im Zusammenhang mit der ersten Ausführungsform der Abtropfstation beschrieben worden ist.

Der Rollenbahn-Antriebsteil 193' der zweiten Ausführungsform unterscheidet sich von demjenigen der ersten Ausführungsform lediglich dadurch, daß er nicht nur einen Getriebemotor 194, sondern deren zwei umfaßt, welche bezüglich einer die Drehachse 160 des Drehrahmens 152 enthaltenen horizontalen Ebene symmetrisch zueinander ausgebildet und ausgerichtet sind, so daß die Wellen 328 der direkt angetriebenen Tragrollen 316a der unteren Rollenbahn 310 der ersten Aufnahme 174a und der unteren Rollenbahn 310 der zweiten Aufnahme 174b gleichzeitig an jeweils einen der Getriebemotore 194 angekoppelt werden können.

Zu diesem Zweck ist jeder der beiden Getriebemotore 194 auf jeweils einem Verschiebeschlitten 232 an jeweils einer Verschiebeführung 236 verschieblich geführt, wobei die Verschiebungen beider Verschiebeschlitten 232 durch dieselbe Bewegungseinrichtung 238 bewirkt werden und somit untereinander synchronisiert sind.

Die Verriegelungseinrichtungen 244 der Drehvorrichtung 110' der zweiten Ausführungsform unterscheiden sich von denjenigen der ersten Ausführungsform lediglich dadurch, daß der Verriegelungs-Antriebsteil 248', ebenso wie der Rollenbahn-Antriebsteil 193', nicht nur einen Getriebemotor 194, sondern deren zwei umfaßt, welche bezüglich einer die Drehachse 160 des Drehrahmens 152 enthaltenen horizontalen Ebene symmetrisch zueinander ausgebildet und ausgerichtet sind, so daß die Gewindespindeln 250 der Verriegelungsteile 246 der ersten Aufnahme 174a und der zweiten Aufnahme 174b gleichzeitig an jeweils einen der Getriebemotore 194 angekoppelt werden können.

Um in den vorstehend beschriebenen Aufnahmen 174a bzw. 174b der Drehvorrichtung 110' aufgenommen werden zu können, sind die Fahrzeugkarosserien 108 bei der zweiten Ausführungsform der Abtropfstation 100 auf einem Skidrahmen der in Fig. 26 dargestellten Art angeordnet.

Ein solcher Skidrahmen 106' umfaßt zwei parallel im Abstand voneinander angeordnete Skidkufen 136', die beispielsweise als Hohlprofile mit rechteckigem Querschnitt ausgebildet sind.

Jede der Skidkufen 136' weist eine sich in der Längsrichtung des Skidrahmens 106' erstreckende, im wesentlichen rechteckige ebene untere Auflagefläche 338 und eine der unteren Auflagefläche 338 abgewandte, sich ebenfalls in der Längsrichtung des Skidrahmens 106' erstreckende, im wesentlichen rechteckige ebene obere Auflagefläche 340 auf.

Die Auflageflächen 338 und 340 dienen dazu, den Skidrahmen 106' auf den Mantelflächen von zylindrischen Tragkörpern 324 von Tragrollen einer Rollenbahn abzustützen.

Die beiden Skidkufen 136' des Skidrahmens 106' sind mittels mehrerer senkrecht zu den Skidkufen 136' ausgerichteter Querstreben und mittels Quertraversen 342, welche sich ebenfalls senkrecht zur Längsrichtung des Skidrahmens 106' erstrecken und über Stützen 344 an den inneren Seitenwänden 346 der Skidkufen 136' gehalten sind, miteinander verbunden.

Die Quertraversen 342 dienen der Aufnahme der zu tragenden Fahrzeugkarosserie 108 und sind zu diesem Zweck an ihren Enden mit Verriegelungselementen 348 versehen, mittels derer die Fahrzeugkarosserie 108 an den Quertraversen 342 festlegbar ist.

Die Skidkufen 136' können sowohl in der in Fig. 26 dargestellten Standardstellung (mit der unteren Auflagefläche 338) als auch in einer Kopfüberstellung, in welcher der Skidrahmen 106' um 180° um eine horizontale Drehachse gedreht ist, (mit der oberen Auflagefläche 340) auf Tragrollen einer Rollenbahn aufliegen und durch die Reibung zwischen den Auflageflächen 338 oder 340 einerseits und den Mantelflächen der Tragkörper der Rollenbahn andererseits vorwärts bewegt werden.

So liegen die Skidkufen 136' des in Fig. 21 oben dargestellten Skidrahmens 106' auf der unteren Stützfläche 330 der unteren Rollenbahn 310 der ersten Aufnahme 174a der Drehvorrichtung 110' auf, so daß dieser obere Skidrahmen 106' mittels der unteren Rollenbahn 310 der ersten Aufnahme 174a transportiert werden kann, während der in Fig. 21 unten dargestellte Skidrahmen 106' mit seinen Skidkufen 136' auf der oberen Stützfläche 332 der oberen Rollenbahn 312 der zweiten Aufnahme 174b der Drehvorrichtung 110' aufliegt und somit mittels der oberen Rollenbahn 312 der zweiten Aufnahme 174b transportiert werden kann.

Wie aus den Fig. 16 bis 23 zu ersehen ist, ist der Drehvorrichtung 110' in der Förderrichtung 102 eine eingangsseitige Zuführ-Rollenbahn 104' vorgeordnet, welche an einem von der Deckenwand 120 der Kabine 114 herabhängenden Gerüst 350 angeordnet ist, welches an seiner Unterseite zwei parallel zur Förderrichtung 102 ausgerichtete Längsrahmenträger 352 hält.

An diesen Längsrahmenträgern 352 sind die zylindrischen Tragkörper 354 von Tragrollen 356 der Zuführ-Rollenbahn 104' drehbar gelagert. Mittels an den Tragrollen angeordneter (nicht dargestellter) Zahnräder und (ebenfalls nicht dargestellter) Ketten stehen die Tragrollen 356 der Zuführ-Rollenbahn 104' mit (nicht dargestellten) Antriebsmotoren in Wirkverbindung, so daß die Tragkörper 354 der Tragrollen 356 in Drehbewegung versetzt werden können. Dabei kann vorgesehen sein, daß die Zuführ-Rollenbahn 104' in derselben Weise mit einem externen Rollenbahn-Antriebsteil 193 mittels einer Kupplung 192 verbindbar ist, wie dies bereits vorstehend im Zusammenhang mit den Rollenbahnen der Drehvorrichtungen 110 bzw. 110' beschrieben worden ist.

Die Tragkörper 354 der Tragrollen 356 der Zuführ-Rollenbahn 104' weisen eine gemeinsame obere Tangentialebene auf, welche eine Stützfläche 358 für die Skidrahmen 106' bildet.

Die Stützfläche 358 der Zuführ-Rollenbahn 104' liegt auf derselben Höhe wie die obere Stützfläche 332 der oberen Rollenbahn 312 der zweiten Aufnahme 174b in der in Fig. 16 dargestellten Stellung der Drehvorrichtung 110', so daß in diesem Zustand der Drehvorrichtung 110' die an der Zuführ-Rollenbahn 104' angeordnete Fahrzeugkarosserie 108 in horizontaler Richtung von der Zuführ-Rollenbahn 104' auf die obere Rollenbahn 312 der zweiten Aufnahme 174b gefördert werden kann.

Damit die Fahrzeugkarosserien 108 von der Zuführ-Rollenbahn 104' zu der Drehvorrichtung 110' bewegt werden können, weist die Sammelwanne 282 der zweiten Ausführungsform der Abtropfstation 100 keine vordere Begrenzungswand auf.

Im übrigen stimmt die zweite Ausführungsform der Abtropfstation 100 mit der vorstehend beschriebenen ersten Ausführungsform überein.

Die zweite Ausführungsform der Abtropfstation 100 funktioniert wie folgt:

In einem in Fig. 16 dargestellten Betriebszustand befindet sich eine erste Fahrzeugkarosserie 300 in Standardstellung auf der Abführ-Rollenbahn 112.

In der (in Fig. 16 oben dargestellten) ersten Aufnahme 174a ist eine zweite Fahrzeugkarosserie 302 aufgenommen, welche sich in einer Ausfahrstellung befindet, in welcher die zweite Fahrzeugkarosserie 302 nicht gegenüber der Horizontalen gedreht ist.

Ferner ist in dem in Fig. 16 dargestellten Betriebszustand eine dritte Fahrzeugkarosserie 304 in der in Fig. 16 unten dargestellten zweiten Aufnahme 174b der Drehvorrichtung 110' aufgenommen und befindet sich in einer Einfahrstellung, in welcher die dritte Fahrzeugkarosserie 304 (verglichen mit der Standardstellung der Fahrzeugkarosserie 304) um einen Winkel von 180° gegenüber der Horizontalen gedreht ist.

Das von der zweiten Fahrzeugkarosserie 302 in der Ausfahrstellung abtropfende Naßmedium gelangt zunächst in die Abflußrinnen 281 der Trennwand 279 der ersten Aufnahme 174a, strömt in diesen Abflußrinnen 281 bis ans vordere oder hintere Ende der Trennwand 279 und tropft von dort in die Sammelwanne 282, ohne auf die in der Einfahrstellung befindliche dritte Fahrzeugkarosserie 304 zu gelangen und dieselbe zu verschmutzen.

Das von der dritten Fahrzeugkarosserie 304 in der Einfahrstellung abtropfende Naßmedium gelangt direkt in die Sammelwanne 282 und fließt aus derselben durch die Naßmedium-Abführleitung 290 ab.

Ferner ist in dem in Fig. 16 dargestellten Betriebszustand eine vierte Fahrzeugkarosserie 306 in Kopfüberstellung an der Zuführ-Rollenbahn 104' angeordnet.

Aus der in Fig. 16 dargestellten Stellung wird der Drehrahmen 152 mittels des Drehantriebsmotors 162 (in der Blickrichtung der Fig. 16 im Uhrzeigersinn) um +45° um die horizontale Drehachse 160 gedreht, bis der in Fig. 17 dargestellte Betriebszustand erreicht ist.

Nach Abschluß der Drehung um +45° befindet sich die zweite Fahrzeugkarosserie 302 in einer ersten oberen Abtropfstellung, in welcher diese Fahrzeugkarosserie um +45° gegenüber der Horizontalen gedreht ist. In dieser ersten oberen Abtropfstellung kann Naßmedium, welches sich in der Bodenwanne der Fahrzeugkarosserie 302 angesammelt hat, durch am hinteren Ende der Bodengruppe dieser Karosserie angeordnete Öffnungen abfließen.

Zugleich befindet sich die dritte Fahrzeugkarosserie 304 in einer ersten unteren Abtropfstellung, in welcher diese Fahrzeugkarosserie um 225° gegenüber der Horizontalen gedreht ist. In dieser ersten unteren Abtropfstellung kann Naßmedium, das sich in der Kopfüberstellung der Karosserie über dem Dach angesammelt hat, durch die Frontscheibenöffnung abfließen.

Nachdem die Fahrzeugkarosserien 302 und 304 während einer vorgegebenen Abtropftaktzeit in ihren Abtropfstellungen gehalten worden sind, wird der Drehrahmen 152 mittels des Drehantriebsmotors 162 (in der Blickrichtung der Fig. 17 im Gegenuhrzeigersinn) um -90° um die horizontale Drehachse 160 gedreht, bis der in Fig. 18 dargestellte Betriebszustand erreicht ist.

Nach Abschluß der Drehung um -90° befindet sich die zweite Fahrzeugkarosserie 302 in einer zweiten oberen Abtropfstellung, in welcher diese Fahrzeugkarosserie um -45° gegenüber der Horizontalen gedreht ist. In dieser zweiten oberen Abtropfstellung kann Naßmedium, das sich in der Bodenwanne der Fahrzeugkarosserie angesammelt hat, durch am vorderen Ende der Bodengruppe angeordnete Öffnungen abfließen.

Zugleich befindet sich die dritte Fahrzeugkarosserie 304 in einer zweiten unteren Abtropfstellung, in welcher diese Fahrzeugkarosserie um 135° gegenüber der Horizontalen gedreht ist. In dieser zweiten unteren Abtropfstellung kann Naßmedium, das sich über dem Dach der Fahrzeugkarosserie angesammelt hat, durch die geöffnete Heckklappe oder den geöffneten Kofferraumdeckel der Fahrzeugkarosserie nach außen abfließen.

Nachdem die Fahrzeugkarosserien 302 und 304 während einer vorgegebenen Abtropftaktzeit in ihren Abtropfstellungen gehalten worden sind, wird der Drehrahmen 152 mittels des Drehantriebsmotors 162 (in der Blickrichtung der Fig. 18 im Uhrzeigersinn) um +45° um die horizontale Drehachse 160 gedreht, bis der in Fig. 19 dargestellte Betriebszustand erreicht ist.

Nach Abschluß dieser Drehbewegung um +45° befindet sich die zweite Fahrzeugkarosserie 302 wieder in der Ausfahrstellung, während sich die dritte Fahrzeugkarosserie 304 wieder in der Einfahrstellung befindet.

Anschließend wird von dem Steuergerät der Abtropfstation 100 der Antrieb der Abführ-Rollenbahn 112 betätigt, so daß die erste Fahrzeugkarosserie 300 (in der Darstellung der Fig. 19 nach rechts) aus der Abtropfstation 100 hinaus in einen sich daran anschließenden Trocknungsabschnitt gefördert wird.

Darauf werden der Rollenbahn-Antriebsteil 193' und der Verriegelungs-Antriebsteil 148' der Verriegelungseinrichtungen 244 in der vorstehend beschriebenen Weise mittels der Kupplungen 192 bzw. 278 mit den Wellen 328 der direkt angetriebenen Tragrollen 316a der unteren Rollenbahnen 310 der Aufnahmen 174a, 174b der Drehvorrichtung 110' bzw. mit den Gewindespindeln 250 der Verriegelungseinrichtung 244 verbunden. Anschließend wird der der Verriegelungseinrichtung 244 der ersten Aufnahme 174a zugeordnete Getriebemotor 194 betätigt, um die Verriegelung des Skidrahmens 106' der zweiten Fahrzeugkarosserie 302 zu lösen. Darauf wird der den Rollenbahnen 310, 312 der ersten Aufnahme 174a zugeordnete Getriebemotor 194 betätigt, um die zweite Fahrzeugkarosserie 302 mittels der unteren Rollenbahn 310 der ersten Aufnahme 174a der Drehvorrichtung 110' auf die Abführ-Rollenbahn 112 zu fördern.

Darauf werden der Rollenbahn-Antriebsteil 193' und der Verriegelungs-Antriebsteil 148' von den Wellen 328 bzw. den Gewindespindeln 250 abgekuppelt.

Anschließend wird der Drehrahmen 152 mittels des Drehantriebsmotors 162 (in der Blickrichtung der Fig. 19 im Gegenuhrzeigersinn) um 180° um die horizontale Drehachse 160 gedreht, bis sich die dritte Fahrzeugkarosserie 304 in der Ausfahrstellung befindet.

Hat die dritte Fahrzeugkarosserie 304 die Ausfahrstellung erreicht, so werden der Rollenbahn-Antriebsteil 193' und der Verriegelungs-Antriebsteil 148' wieder mittels der Kupplungen 192 bzw. 278 an die Wellen 328 der direkt angetriebenen Tragrollen 316a der unteren Rollenbahnen 310 der Aufnahmen 174a, 174b der Drehvorrichtung 110' bzw. mit den Gewindespindeln 250 der Verriegelungseinrichtungen 244 verbunden. Darauf werden der Antrieb der Zuführ-Rollenbahn 104' und der den Rollenbahnen 310, 312 der ersten Aufnahme 174a zugeordnete Getriebemotor 194 betätigt, um die vierte Fahrzeugkarosserie 306 mittels der oberen Rollenbahn 312 der ersten Aufnahme 174a der Drehvorrichtung 110' auf die Drehvorrichtung 110' zu fördern.

Darauf wird der der Verriegelungseinrichtung 244 der ersten Aufnahme 174a zugeordnete Getriebemotor 194 betätigt, um den Skidrahmen 106' der vierten Fahrzeugkarosserie 306 an der Drehvorrichtung 110' zu verriegeln.

Anschließend werden der Rollenbahn-Antriebsteil 193' und der Verriegelungs-Antriebsteil 148' von den Wellen 328 bzw. den Gewindespindeln 250 abgekuppelt.

Schließlich wird eine fünfte Fahrzeugkarosserie 308 (in der Darstellung der Fig. 19 gesehen von links) aus dem in der Förderrichtung 102 vor der Abtropfstation 100 liegenden Bereich auf die Zuführ-Rollenbahn 104' gefördert.

Damit ist der in Fig. 20 dargestellte Betriebszustand erreicht.

Anschließend wird der Drehrahmen 152 mittels des Drehantriebsmotors 162 (in der Blickrichtung der Fig. 20 im Uhrzeigersinn) um +45° um die horizontale Drehachse 160 gedreht, bis der in Fig. 21 dargestellte Betriebszustand erreicht ist.

Nach Abschluß der Drehung um +45° befindet sich die dritte Fahrzeugkarosserie 304 in der ersten oberen Abtropfstellung, während sich die vierte Fahrzeugkarosserie 306 in der ersten unteren Abtropfstellung befindet.

Nachdem die Fahrzeugkarosserien 304 und 306 während einer vorgegebenen Abtropftaktzeit in ihren Abtropfstellungen gehalten worden sind, wird der Drehrahmen 152 mittels des Drehantriebsmotors 162 (in der Blickrichtung der Fig. 21 im Gegenuhrzeigersinn) um 90° um die horizontale Drehachse 160 gedreht, bis der in Fig. 22 dargestellte Betriebszustand erreicht ist.

Nach Abschluß der Drehung um -90° befindet sich die dritte Fahrzeugkarosserie 304 in der zweiten oberen Abtropfstellung, während sich die vierte Fahrzeugkarosserie 306 in der zweiten unteren Abtropfstellung befindet.

Nachdem die Fahrzeugkarosserien 304 und 306 während einer vorgegebenen Abtropftaktzeit in ihren Abtropfstellungen gehalten worden sind, wird der Drehrahmen 152 mittels des Drehantriebsmotors 162 (in der Blickrichtung der Fig. 22 im Uhrzeigersinn) um +45° um die horizontale Drehachse 160 gedreht, bis der in Fig. 23 dargestellte Betriebszustand erreicht ist.

Nach Abschluß der Drehung um +45° befindet sich die dritte Fahrzeugkarosserie 304 in der Ausfahrstellung, während sich die vierte Fahrzeugkarosserie 306 in der Einfahrstellung befindet.

Mit dem erneuten Erreichen der Ausfahrstellung ist der Abtropfzyklus für die dritte Fahrzeugkarosserie 304 in der Drehvorrichtung 110' abgeschlossen, so daß diese Karosserie aus der Drehvorrichtung 110' in der bereits vorstehend im Zusammenhang mit der zweiten Fahrzeugkarosserie 302 beschriebenen Weise ausgefahren werden kann.

## Patentansprüche

1. Abtropfstation zum Entfernen eines Naßmediums aus Fahrzeugkarosserien (108),
umfassend eine Drehvorrichtung (110; 110'), welche eine Aufnahme (174a; 174a, 174b) für eine Fahrzeugkarosserie (108) umfaßt und mittels welcher die Fahrzeugkarosserie (108) in mindestens eine Abtropfstellung drehbar ist,
dadurch gekennzeichnet, daß
die Drehvorrichtung (110; 110') so ausgebildet ist, daß die in der Aufnahme (174a; 174a, 174b) aufgenommene Fahrzeugkarosserie (108) um eine Drehachse (160) der Drehvorrichtung (110; 110') frei drehbar und in beliebig vorgebbaren Abtropfstellungen anhaltbar ist.

2. Abtropfstation nach Anspruch 1, dadurch gekennzeichnet, daß die Drehachse (160) der Drehvorrichtung (110; 110') im wesentlichen horizontal ausgerichtet ist.

3. Abtropfstation nach einem der Ansprüche 1 oder 2, dadurch gekennzeichnet, daß die Drehachse (160) der Drehvorrichtung (110; 110') quer zur Längsrichtung der an der Drehvorrichtung (110; 110') aufgenommenen Fahrzeugkarosserie (108), vorzugsweise im wesentlichen senkrecht zur Längsrichtung der Fahrzeugkarosserie (108), ausgerichtet ist.

4. Abtropfstation nach einem der Ansprüche 1 bis 3, dadurch gekennzeichnet, daß die Fahrzeugkarosserie (108) mittels der Drehvorrichtung (110; 110') in zwei einander entgegengesetzte Drehrichtungen drehbar ist.

5. Abtropfstation nach einem der Ansprüche 1 bis 4, dadurch gekennzeichnet, daß die Abtropfstation (100) eine Verriegelungseinrichtung (244) umfaßt, mittels derer die Fahrzeugkarosserie (108) an der Drehvorrichtung (110; 110') festlegbar ist.

6. Abtropfstation nach Anspruch 5, dadurch gekennzeichnet, daß die Verriegelungseinrichtung (244) einen sich mit der Fahrzeugkarosserie (108) mitdrehenden Verriegelungsteil (246) und einen sich nicht mit der Fahrzeugkarosserie (108) mitdrehenden Antriebsteil (248) umfaßt.

7. Abtropfstation nach Anspruch 6, dadurch gekennzeichnet, daß die Verriegelungseinrichtung (244) eine Kupplung (278) umfaßt, mittels welcher eine Wirkverbindung zwischen dem Verriegelungsteil (246) und dem Antriebsteil (248) vor dem Drehen der Fahrzeugkarosserie (108) lösbar und nach dem Drehen der Fahrzeugkarosserie (108) wieder herstellbar ist.

8. Abtropfstation nach einem der Ansprüche 6 oder 7, dadurch gekennzeichnet, daß die Abtropfstation eine Abdeckung (122) umfaßt, durch welche der Antriebsteil (248) der Verriegelungseinrichtung (244) vor dem von der Fahrzeugkarosserie (108) abtropfenden Naßmedium geschützt ist.

9. Abtropfstation nach einem der Ansprüche 1 bis 8, dadurch gekennzeichnet, daß die Drehvorrichtung (110; 110') zwei Aufnahmen (174a, 174b) für jeweils eine Fahrzeugkarosserie (108) umfaßt.

10. Abtropfstation nach Anspruch 9, dadurch gekennzeichnet, daß die beiden Aufnahmen (174a, 174b) für Fahrzeugkarosserien (108) auf verschiedenen Seiten der Drehachse (160) der Drehvorrichtung (110; 110') angeordnet sind.

11. Abtropfstation nach Anspruch 10, dadurch gekennzeichnet, daß die beiden Aufnahmen (174a, 174b) für Fahrzeugkarosserien (108) bezüglich der Drehachse (160) im wesentlichen symmetrisch zueinander ausgebildet sind.

12. Abtropfstation nach einem der Ansprüche 9 bis 11, dadurch gekennzeichnet, daß die beiden Aufnahmen (174a, 174b) für Fahrzeugkarosserien (108) durch eine dazwischen angeordnete Trennwand (279) voneinander getrennt sind.

13. Abtropfstation nach Anspruch 12, dadurch gekennzeichnet, daß die Trennwand (279) in der Längsrichtung der in den Aufnahmen (174a, 174b) aufgenommenen Fahrzeugkarosserien (108) und quer zu dieser Längsrichtung über die in den Aufnahmen aufgenommenen Fahrzeugkarosserien (108) übersteht.

14. Abtropfstation nach Anspruch 13, dadurch gekennzeichnet, daß in der Trennwand (279) Abflußrinnen (281) ausgebildet sind.

15. Abtropfstation nach Anspruch 14, dadurch gekennzeichnet, daß die Abflußrinnen (281) im wesentlichen parallel zu der Längsrichtung der in den Aufnahmen (174a, 174b) aufgenommenen Fahrzeugkarosserien (108) ausgerichtet sind.

16. Abtropfstation nach einem der Ansprüche 1 bis 15, dadurch gekennzeichnet, daß die Aufnahme (174a, 174b) der Drehvorrichtung (110; 110') eine Rollenbahn (180; 310) zum Transport von auf Skidrahmen (106; 106') angeordneten Fahrzeugkarosserien (108) umfaßt, an welcher sich der Skidrahmen (106; 106') in einer Standardstellung der in der Aufnahme (174a, 174b) aufgenommenen Fahrzeugkarosserie (108) abstützt.

17. Abtropfstation nach Anspruch 16, dadurch gekennzeichnet, daß die Aufnahme (174a, 174b) der Drehvorrichtung (110; 110') eine weitere Rollenbahn (312) umfaßt, an welcher sich der Skidrahmen (106') der in der Aufnahme (174a, 174b) aufgenommenen Fahrzeugkarosserie (108) in einer Kopfüberstellung der Fahrzeugkarosserie (108) abstützt.

18. Abtropfstation nach einem der Ansprüche 16 oder 17, dadurch gekennzeichnet, daß die Abtropfstation (100) einen Rollenbahn-Antriebsteil (193; 193') umfaßt, welcher sich nicht mit der Fahrzeugkarosserie (108) mitdreht.

19. Abtropfstation nach Anspruch 18, dadurch gekennzeichnet, daß die Abtropfstation (100) eine Kupplung (192) umfaßt, mittels welcher eine Wirkverbindung zwischen der Rollenbahn (180; 310) und dem Rollenbahn-Antriebsteil (193; 193') vor dem Drehen der Fahrzeugkarosserie (108) lösbar und nach dem Drehen der Fahrzeugkarosserie (108) wieder herstellbar ist.

20. Abtropfstation nach einem der Ansprüche 18 oder 19, dadurch gekennzeichnet, daß der Rollenbahn-Antriebsteil (193; 193') einen auf einem verschiebbaren Verschiebeschlitten (232) angeordneten Antriebsmotor (194) umfaßt.

21. Abtropfstation nach Anspruch 20, dadurch gekennzeichnet, daß der Rollenbahn-Antriebsteil (193') zwei auf synchron zueinander verschiebbaren Verschiebeschlitten (232) angeordnete Antriebsmotoren (194) umfaßt.

22. Abtropfstation nach einem der Ansprüche 18 bis 21, dadurch gekennzeichnet, daß die Abtropfstation (100) eine Abdeckung (122) umfaßt, durch welche der Rollenbahn-Antriebsteil (193; 193') vor dem von den Fahrzeugkarosserien (108) abtropfenden Naßmedium geschützt ist.

23. Abtropfstation nach einem der Ansprüche 1 bis 22, dadurch gekennzeichnet, daß die Abtropfstation (100) eine unterhalb der Drehvorrichtung (110; 110') angeordnete Sammelwanne (282) zum Auffangen des Naßmediums umfaßt.

24. Abtropfstation nach Anspruch 23, dadurch gekennzeichnet, daß der Boden (284) der Sammelwanne (282) ein Gefälle aufweist und daß eine Abflußöffnung (288) an der tiefsten Stelle des Bodens (284) angeordnet ist.

25. Abtropfstation nach einem der Ansprüche 1 bis 24, dadurch gekennzeichnet, daß die Abtropfstation ein Steuergerät umfaßt, welches die Drehvorrichtung (110; 110') so steuert, daß diese die jeweils an der Drehvorrichtung angeordnete Fahrzeugkarosserie (108) in eine oder mehrere dem jeweiligen Fahrzeugkarosserietyp zugeordnete Abtropfstellungen dreht.

26. Verfahren zum Entfernen eines Naßmediums aus Fahrzeugkarosserien,
beim dem eine Fahrzeugkarosserie in einer Aufnahme einer Drehvorrichtung angeordnet und mittels der Drehvorrichtung in mindestens eine Abtropfstellung gedreht wird,
dadurch gekennzeichnet, daß
die Fahrzeugkarosserie mittels einer Drehvorrichtung, deren Aufnahme um eine Drehachse der Drehvorrichtung frei drehbar ist, in mindestens eine beliebig vorgebbare Abtropfstellung gedreht und in dieser Abtropfstellung gehalten wird.

27. Verfahren nach Anspruch 26, dadurch gekennzeichnet, daß die Abtropfstellung in Abhängigkeit vom Typ der zu entleerenden Fahrzeugkarosserie vorgegeben wird.

28. Verfahren nach einem der Ansprüche 26 oder 27, dadurch gekennzeichnet, daß die Fahrzeugkarosserie mittels der Drehvorrichtung nacheinander in mehrere voneinander verschiedene Abtropfstellungen gedreht wird.

29. Verfahren nach einem der Ansprüche 26 bis 28, dadurch gekennzeichnet, daß die Fahrzeugkarosserie mittels der Drehvorrichtung um eine im wesentlichen horizontale Drehachse gedreht wird.

30. Verfahren nach einem der Ansprüche 26 bis 29, dadurch gekennzeichnet, daß die Fahrzeugkarosserie mittels der Drehvorrichtung um eine quer zur Längsrichtung der Fahrzeugkarosserie, vorzugsweise im wesentlichen senkrecht zur Längsrichtung der Fahrzeugkarosserie, ausgerichtete Drehachse gedreht wird.

31. Verfahren nach einem der Ansprüche 26 bis 30, dadurch gekennzeichnet, daß die Fahrzeugkarosserie mittels der Drehvorrichtung nacheinander in zwei einander entgegengesetzte Drehrichtungen gedreht wird.

32. Verfahren nach einem der Ansprüche 26 bis 31, dadurch gekennzeichnet, daß die Fahrzeugkarosserie vor dem Drehen mittels einer Verriegelungseinrichtung an der Drehvorrichtung festgelegt wird.

33. Verfahren nach Anspruch 32, dadurch gekennzeichnet, daß die Verriegelungseinrichtung einen sich mit der Fahrzeugkarosserie mitdrehenden Verriegelungsteil und einen sich nicht mit der Fahrzeugkarosserie mitdrehenden Antriebsteil umfaßt.

34. Verfahren nach Anspruch 33, dadurch gekennzeichnet, daß eine Wirkverbindung zwischen dem Verriegelungsteil und dem Antriebsteil vor dem Drehen der Fahrzeugkarosserie gelöst und nach dem Drehen der Fahrzeugkarosserie wieder hergestellt wird.

35. Verfahren nach einem der Ansprüche 33 oder 34, dadurch gekennzeichnet, daß der Antriebsteil der Verriegelungseinrichtung vor dem von der Fahrzeugkarosserie abtropfenden Naßmedium durch eine Abdeckung geschützt wird.

36. Verfahren nach einem der Ansprüche 26 bis 35, dadurch gekennzeichnet, daß mittels der Drehvorrichtung mehrere Fahrzeugkarosserien gleichzeitig in Reinigungsstellungen gedreht werden.

37. Verfahren nach einem der Ansprüche 26 bis 36, dadurch gekennzeichnet, daß die Fahrzeugkarosserie auf einem Skidrahmen angeordnet ist und vor dem Drehen mittels einer Rollenbahn auf die Drehvorrichtung gefördert und nach dem Drehen mittels einer Rollenbahn aus der Drehvorrichtung herausgefördert wird.

38. Verfahren nach Anspruch 37, dadurch gekennzeichnet, daß die Fahrzeugkarosserie in einer Standardstellung auf die Drehvorrichtung gefördert wird, mittels der Drehvorrichtung in eine Kopfüberstellung gedreht wird und in der Kopfüberstellung aus der Drehvorrichtung herausgefördert wird.

39. Verfahren nach Anspruch 37, dadurch gekennzeichnet, daß die Fahrzeugkarosserie in einer Kopfüberstellung auf die Drehvorrichtung gefördert wird, mittels der Drehvorrichtung in eine Standardstellung gedreht und in der Standardstellung aus der Drehvorrichtung herausgefördert wird.

40. Verfahren nach einem der Ansprüche 37 bis 39, dadurch gekennzeichnet, daß die Rollenbahn mittels eines Rollenbahn-Antriebsteils angetrieben wird, welcher sich nicht mit der Fahrzeugkarosserie mitdreht.

41. Verfahren nach Anspruch 40, dadurch gekennzeichnet, daß eine Wirkverbindung zwischen der Rollenbahn und dem Rollenbahn-Antriebsteil vor dem Drehen der Fahrzeugkarosserie gelöst und nach dem Drehen der Fahrzeugkarosserie wieder hergestellt wird.

42. Verfahren nach Anspruch 41, dadurch gekennzeichnet, daß zum Herstellen der Wirkverbindung zwischen der Rollenbahn und dem Rollenbahn-Antriebsteil ein Antriebsmotor der Rollenbahn relativ zu der Rollenbahn verschoben wird.

43. Verfahren nach Anspruch 42, dadurch gekennzeichnet, daß zwei Antriebsmotoren synchron zueinander relativ zu der Rollenbahn verschoben werden.

44. Verfahren nach einem der Ansprüche 40 bis 43, dadurch gekennzeichnet, daß der Rollenbahn-Antriebsteil durch eine Abdeckung vor dem von der Fahrzeugkarosserie abtropfenden Naßmedium geschützt wird.

45. Verfahren nach einem der Ansprüche 26 bis 44, dadurch gekennzeichnet, daß das von der Fahrzeugkarosserie abtropfende Naßmedium in einer unterhalb der Drehvorrichtung angeordneten Sammelwanne aufgefangen wird.

46. Verfahren nach einem der Ansprüche 26 bis 45, dadurch gekennzeichnet, daß ein Steuergerät die Drehvorrichtung so steuert, daß die Drehvorrichtung die jeweils an der Drehvorrichtung angeordnete Fahrzeugkarosserie in eine oder mehrere dem jeweiligen Fahrzeugkarosserietyp zugeordnete Abtropfstellungen dreht.
